# EUROPEAN PATENT APPLICATION

(11) **EP 4 664 715 A1**
(43) Date of publication of application: **17.12.2025**
(21) Application number: 24771127.8
(22) Date of filing: 08.03.2024
(51) Int. Cl.: H02J 7/00, H02J 7/02, G06F 3/02, G06F 1/16, G06F 1/26

(54) **ELECTRONIC DEVICE, DOCKING DEVICE, AND METHOD FOR OPERATING ELECTRONIC DEVICE AND DOCKING DEVICE**

(30) Priority: 15.03.2023 KR 20230033945; 27.04.2023 KR 20230055418
(71) Applicant: Samsung Electronics Co., Ltd., Suwon-si, Gyeonggi-do 16677 (KR)
(72) Inventor: KIM, Seunghun, Suwon-si, Gyeonggi-do 16677 (KR); KIM, Jeongseob, Suwon-si, Gyeonggi-do 16677 (KR); HAN, Junhee, Suwon-si, Gyeonggi-do 16677 (KR)
(74) Representative: Gulde & Partner
(86) International application number: PCT/KR2024/002999
(87) International publication number: WO 2024/191127

(57) **Abstract**

A docking device, according to one embodiment of the present disclosure, may comprise: a pogo pin unit including a ground pogo pin, a data pogo pin, and a power pogo pin; a charging port to which a charger is connected; a controller for recognizing the type of the charger connected to the charging port; a first switch electrically connected to the pogo pin unit and the controller so as to branch a communication path; a second switch electrically connected to the charging port and the controller; and a third switch electrically connected to the charging port and the pogo pin unit. The controller may generate a switch control signal and control the on/off of the first switch to the third switch. The controller may change, on the basis of the type of the charger connected to the charging port, the communication path to a first communication path for a first charging method or a second communication path for a second charging method. Various other embodiments are also possible.

## Description

### [Technical Field]

The disclosure relates to a docking device that supports high-speed charging of an electronic device (e.g., a smartphone, a tablet personal computer (PC), a wearable electronic device, or a smartwatch), and to a method of operating the electronic device and the docking device.

### [Background Art]

The term "electronic device" may refer to a device that performs a designated function based on a program installed therein, such as a home appliance, an electronic scheduler, a portable multimedia player, a mobile communication terminal, a tablet PC, a video/audio device, a desktop/laptop PC, or a vehicle navigation system.

The electronic device and the docking device may be electrically connected so as to perform communication and charging. In the case of a general docking device, charging was supported up to about 15W, and in order to perform high-speed charging of 25W or more, charging through a direct charger using power delivery (PD) communication is required. When charging an electronic device using pogo pins of the docking device (e.g., pogo dock), it may be possible to determine whether the docking device supports high-speed charging by using one-wire communication.

The above-described contents are provided as only background information to assist in understanding embodiments of the disclosure. No determination and no assertion have been made as to whether any of the above might be applicable as prior art with regard to the disclosure.

### [Disclosure of Invention]

### [Technical Problem]

A general docking device including three pogo pins (e.g., a ground pogo pin, a data pogo pin, and a power pogo pin) performs PD communication using one-wire communication through the data pogo pin. To perform high-speed charging, PD communication is used to enable high-speed charging through a direct charger via PD communication, in which all communication is required to be conducted through a single data pogo pin. For high-speed charging or PD charging, the PD communication needs to be converted into one-wire communication by a microcontroller unit (e.g., an MCU). Due to a delay in communication conversion in the MCU, a communication error may occur, which may result in a malfunction in charging.

An embodiment of the disclosure may provide an electronic device, a docking device that includes three pogo pins, and a method of operating the electronic device and the docking device, which allow high-speed charging (e.g., 25W or more, PD charging) to be performed without errors in PD communication.

An embodiment of the disclosure may provide an electronic device, a docking device, and a method of operating the electronic device and the docking device, which enable high-speed charging (e.g., 25W or more, PD charging) via first communication (e.g., one-wire communication) without delay, by separating a data communication pad from a charging path to prevent communication delay (e.g., to substantially prevent communication delay) during a change in the charging mode.

The technical subjects pursued in the disclosure may not be limited to the above-mentioned technical subjects, and other technical subjects which are not mentioned herein may be clearly understood from the following description by those skilled in the art to which the disclosure pertains.

According to an embodiment of the disclosure, a docking device may include a pogo pin unit including a ground pogo pin, a data pogo pin, and a power pogo pin, a charging port to which a charger is connected, a controller configured to recognize a type of the charger connected to the charging port, a first switch electrically connected to the pogo pin unit and the controller, and configured to branch a communication path, a second switch electrically connected between the charging port and the controller, and a third switch electrically connected between the charging port and the pogo pin unit. The controller may be configured to generate a switch control signal to control on/off of the first to third switches. The controller may be configured to switch the communication path to a first communication path for a first charging mode or a second communication path for a second charging mode, based on the type of the charger connected to the charging port.

According to an embodiment of the disclosure, a method of operating a docking device may include identifying a connection with an electronic device through a pogo pin unit, identifying whether a charger is connected to a charging port, identifying a charging type of the charger, recognizing communication data, ground, and power input from the charging port, providing data indicating that the charger is connected to the electronic device, determining whether the charger supports high-speed charging, and switching the communication path to a first communication path for a first charging mode or a second communication path for a second charging mode, based on the type of the charger connected to the charging port.

The electronic device, docking device, and method of operating the electronic device and the docking device according to the disclosure may enable high-speed charging (e.g., 25W or more, PD charging) to be performed without errors in PD communication when the charging (e.g., 25W or more, PD charging) is performed using a docking device including three pogo pins.

The electronic device, docking device, and method of operating the electronic device and the docking device according to the disclosure may enable high-speed charging (e.g., 25W or more, PD charging) without delay via first communication (e.g., one-wire communication) by separating a data communication pad from a charging path, so as to prevent (e.g., substantially prevent) communication delay during switching of the charging mode.

Advantageous effects obtainable from the disclosure may not be limited to the above-mentioned effects, and other effects which are not mentioned herein may be clearly understood from the following description by those skilled in the art to which the disclosure pertains.

Various other effects understood directly or indirectly through the disclosure may be provided.

### [Brief Description of Drawings]

With regard to the description of the drawings, the same or like reference signs may be used to designate the same or like elements.
FIG. 1 is a block diagram of an electronic device in a network environment according to an embodiment of the disclosure.
FIGS. 2A and 2B are a front view and a rear view of an electronic device according to an embodiment of the disclosure in an unfolded state.
FIGS. 2C and 2D are a front view and a rear view of the electronic device according to an embodiment of the disclosure in a folded state.
FIG. 3A is a perspective view of an electronic device according to an embodiment of the disclosure illustrating a first surface (e.g., the front surface) thereof.
FIG. 3B is a perspective view of the electronic device according to an embodiment of the disclosure illustrating a second surface (e.g., the rear surface) thereof.
FIG. 4 is a view illustrating a first surface (e.g., a front surface) in a state in which an electronic device is mounted on a docking device (e.g., a pogo pin dock device).
FIG. 5 is a view illustrating the docking device (e.g., a pogo pin dock device) including a pogo pin unit illustrated in FIG. 4.
FIG. 6 is a view illustrating a second surface (e.g., a rear surface) in a state in which an electronic device is mounted on the docking device (e.g., a pogo pin dock device).
FIG. 7 is a view illustrating a state in which an electronic device is mounted on a docking device (e.g., a pogo pin dock device).
FIG. 8 is a view illustrating the docking device including a pogo pin unit illustrated in FIG. 7.
FIG. 9 is a view illustrating a state in which a keyboard docking device is connected to an electronic device.
FIG. 10 is a view illustrating an electronic device and a docking device according to an embodiment of the disclosure.
FIG. 11 is a view illustrating a method of operating an electronic device and a docking device according to an embodiment of the disclosure.
FIG. 12 illustrates a method of operating an electronic device according to an embodiment of the disclosure.
FIG. 13 illustrates a method of operating a docking device according to an embodiment of the disclosure.
FIG. 14 is a view illustrating a method of operating an electronic device and a keyboard docking device according to an embodiment of the disclosure.
FIG. 15 illustrates a method of operating an electronic device according to an embodiment of the disclosure.
FIG. 16 illustrates a method of operating a keyboard docking device according to an embodiment of the disclosure.

It should be noted that throughout the drawings, the same reference numbers are used to describe the same or similar elements, features, and structures.

### [Mode for the Invention]

The following description with reference to the accompanying drawings is provided to assist in comprehensive understanding of an embodiment of the disclosure as defined by the claims and equivalents thereof. The description includes various specific details to assist in the understanding, but the details are to be regarded merely as examples. Accordingly, those skill in the art will recognize that various changes and modifications may be made to an embodiment set forth herein without departing from the scope and spirit of the disclosure. In addition, descriptions of well-known functions and configurations may be omitted for the sake of clarity and conciseness.

The terms and words used in the following description and the claims are not limited to the bibliographical meanings thereof, but are merely used by the inventors to enable clear and consistent understanding of the disclosure. Accordingly, it will be apparent to those skilled in the art that the following description of various embodiments of the disclosure is not intended to limit the disclosure as defined by the appended claims and equivalents thereof, but is provided merely for the purpose of illustration.

It is to be understood that the expressions in singular forms include plural referents unless the context clearly dictates otherwise. Therefore, for example, reference to "a component surface" includes reference to one or more such surfaces.

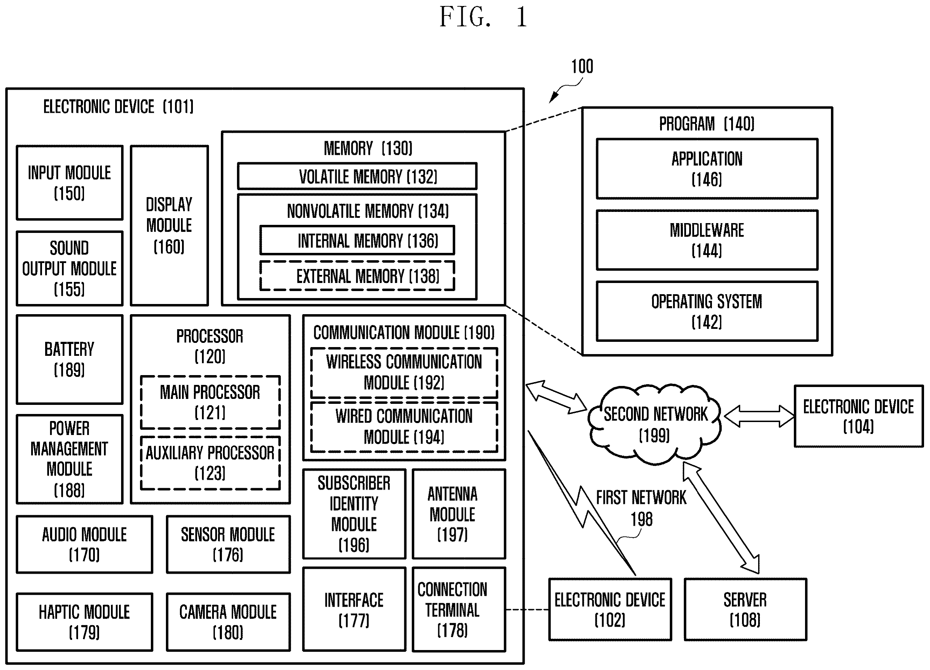

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

According to an embodiment, a display module 160 may include a flexible display configured to be folded or unfolded.

According to an embodiment, the display module 160 may include a flexible display that is slidably arranged to provide a screen (e.g., a display screen).

According to an embodiment, the display module 160 may be referred to as a transformable display (e.g., a stretchable display, an expandable display, or a slide-out display).

According to an embodiment, the display module 160 may also include a bar-type display or a plate-type display.

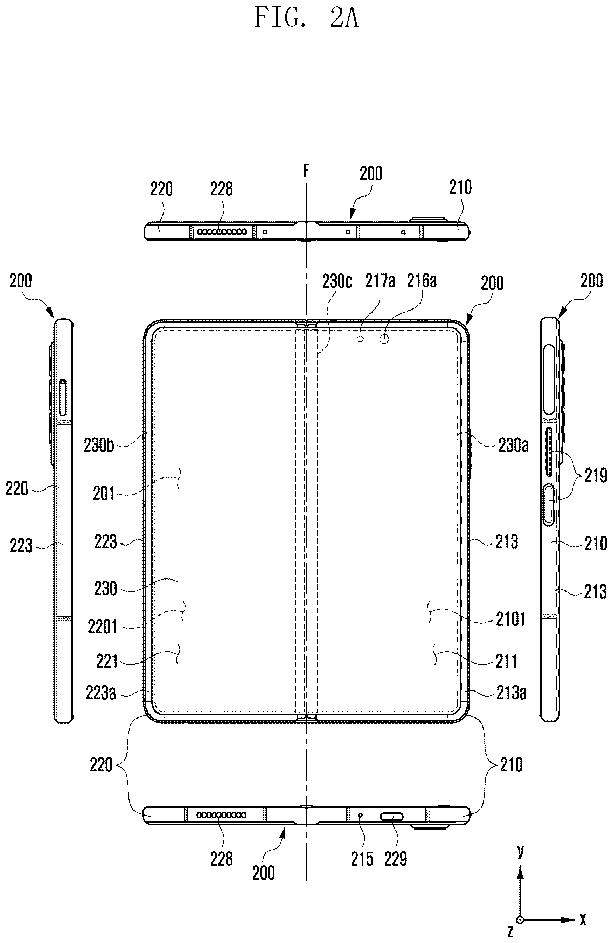

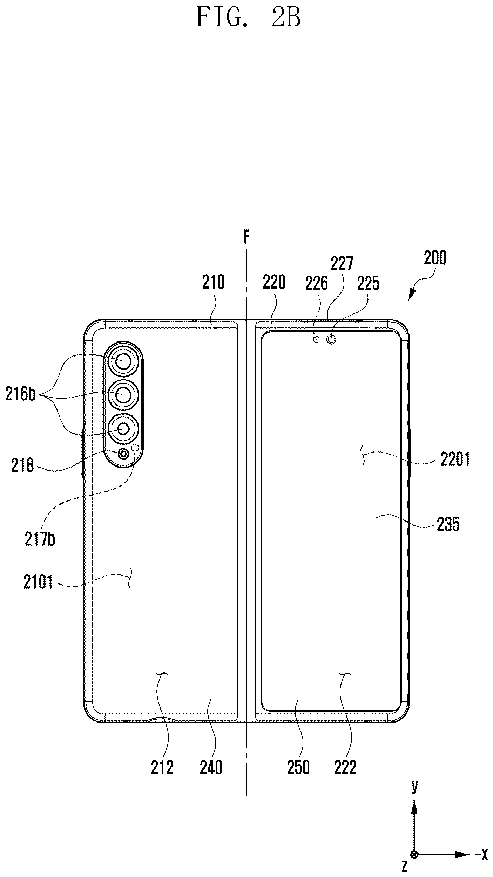

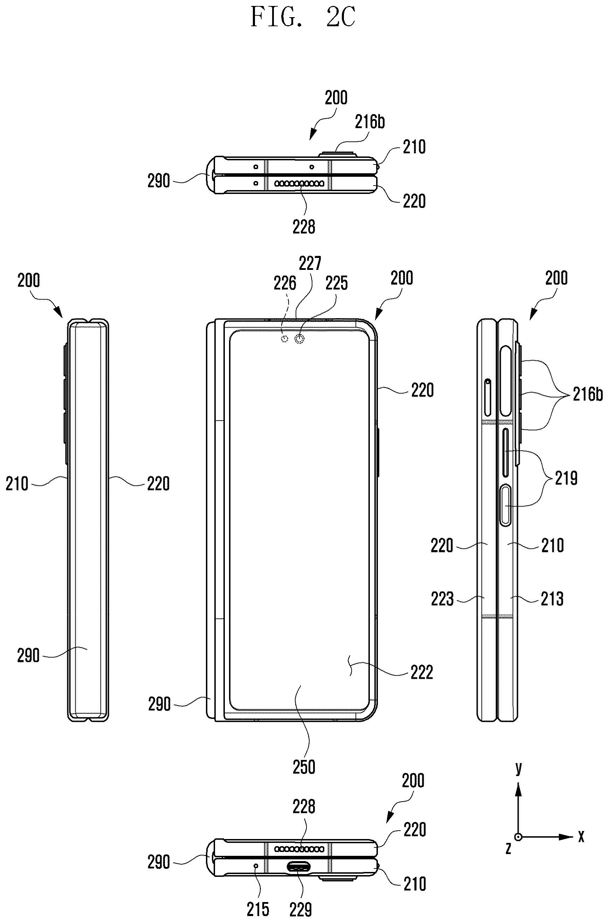

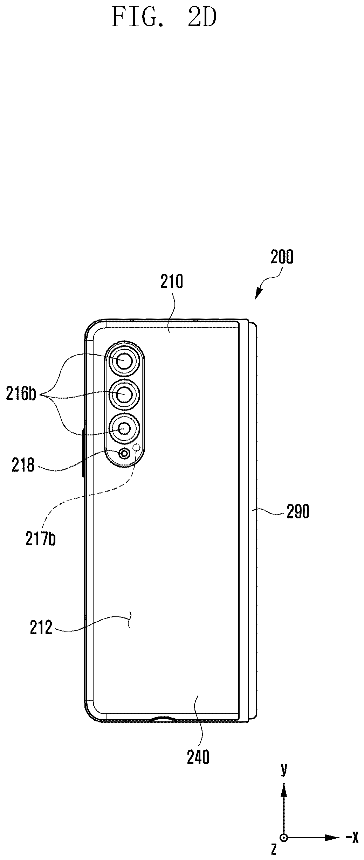

FIGS. 2A and 2B are a front view and a rear view of an electronic device according to an embodiment of the disclosure in an unfolded state. FIGS. 2C and 2D are a front view and a rear view of the electronic device according to an embodiment of the disclosure in a folded state.

Referring to FIGS. 2A to 2D, according to an embodiment of the disclosure, an electronic device 200 (e.g., the electronic device 101 of FIG. 1) may include a pair of housings 210 and 220 (e.g., a foldable housing structure) coupled to each other to be rotatable about a folding axis F via at least one hinge device (e.g., a hinge module or a hinge structure) so as to be foldable relative to each other, a first display 230 (e.g., a flexible display, a foldable display, or a main display) disposed across the pair of housings 210 and 220, and/or a second display 235 (e.g., a sub-display) disposed through the second housing 220.

According to an embodiment, at least a portion of the at least one hinge device may be disposed to be invisible from the outside through the first housing 210 and the second housing 220, and in the unfolded state, the hinge housing 290 (e.g., a hinge cover), which covers the foldable portion, may be disposed to be invisible from the outside. Herein, a surface on which the first display 230 is disposed may be defined as a front surface of the electronic device 200. Herein, an opposite surface of the front surface may be defined as a rear surface of the electronic device 200. In addition, the surface surrounding the space between the front surface and the rear surface may be defined as the side surface of the electronic device 200.

According to an embodiment, the pair of housings 210 and 220 may include a first housing 210 and a second housing 220 that are foldable relative to each other via at least one hinge device.

According to an embodiment, the pair of housings 210 and 220 are not limited to the shape and assembly illustrated in FIGS. 2A to 2D, but may be implemented by other shapes or other combinations and/or assemblies of components.

According to an embodiment, the first housing 210 and the second housing 220 may be disposed on opposite sides of the folding axis F, may have shapes that are generally symmetrical to each other with respect to the folding axis F, and may be folded to match each other.

According to an embodiment, the first housing 210 and the second housing 220 may be folded asymmetrically with respect to the folding axis F.

According to an embodiment, the first housing 210 and the second housing 220 may form an angle or have a distance therebetween, which may be variable depending on whether the electronic device 200 is in the unfolded state, in the folded state, or in the intermediate state. For example, the electronic device 200 may detect whether it is in the unfolded state, the folded state, or the intermediate state by using a sensor module (e.g., the sensor module 176 of FIG. 1). The electronic device 200 may detect an angle formed between the first housing 210 and the second housing 220 by using a sensor module (e.g., the sensor module 176 of FIG. 1).

According to an embodiment, the first housing 210 may be connected to at least one hinge device when the electronic device 200 is in the unfolded state. The first housing 210 may include a first surface 211 oriented in a forward direction of the electronic device 200, a second surface 212 oriented in an opposite direction from the first surface 211, and/or a first side surface member 213 that surrounds at least a portion of a first space 2101 between the first surface 211 and the second surface 212.

According to an embodiment, the second housing 220 may be connected to at least one hinge device when the electronic device 200 is in the unfolded state. The second housing 220 may include a third surface 221 oriented in the forward direction of the electronic device 200, a fourth surface 222 oriented in an opposite direction from the third surface 221, and/or a second side surface member 223 that surrounds at least a portion of a second space 2201 between the third surface 221 and the fourth surface 222.

According to an embodiment, the first surface 211 may be oriented in substantially the same direction as the third surface 221 in the unfolded state and may at least partially face the third surface 221 in the folded state.

According to an embodiment, the electronic device 200 may further include a recess 201 defined to accommodate the first display 230 through structural coupling between the first housing 210 and the second housing 220.

According to an embodiment, the recess 201 may have substantially the same size as the first display 230.

According to an embodiment, the first housing 210 may be coupled to the first side surface member 213 when the first display 230 is viewed from above. The first housing 210 may include a first protective frame 213a (e.g., a first decoration member) that covers an edge of the first display 230 so as to be invisible from the outside by overlapping the edge of the first display 230.

According to an embodiment, the first protective frame 213a may be integrated with the first side surface member 213.

According to an embodiment, the second housing 220 may be coupled to the second side surface member 223 when the first display 230 is viewed from above. The second housing 220 may include a second protective frame 223a that covers an edge of the first display 230 so as to be invisible from the outside by overlapping the edge of the first display 230.

According to an embodiment, the second protective frame 223a may be integrated with the second side surface member 223. In an embodiment, the first protective frame 213a and the second protective frame 223a may be omitted.

According to an embodiment, the hinge housing 290 (e.g., a hinge cover) may be disposed between the first housing 210 and the second housing 220. The hinge housing 290 may be disposed to cover at least a portion (e.g., at least one hinge module) of at least one hinge device.

According to an embodiment, the hinge housing 290 may be covered by a portion of the first housing 210 and the second housing 220 or exposed to the outside, depending on whether the electronic device 200 is in the unfolded state, the folded state, or the intermediate state. For example, when the electronic device 200 is in the unfolded state, at least a portion of the hinge housing 290 may be disposed to be covered by the first housing 210 and the second housing 220 to be substantially invisible from the outside.

According to an embodiment, when the electronic device 200 is in the folded state, at least a portion of the hinge housing 290 may be disposed between the first housing 210 and the second housing 220 to be visible from the outside.

According to an embodiment, when the electronic device is in the intermediate state in which the first housing 210 and the second housing 220 are folded with a certain angle, the hinge housing 290 may be disposed between the first housing 210 and the second housing 220 to be at least partially visible from the outside of the electronic device 200. For example, the area of the hinge housing 290 exposed to the outside may be smaller than that in the case where the electronic device is fully folded. According to an embodiment, the hinge housing 290 may include a curved surface.

According to an embodiment, when the electronic device 200 is in the unfolded state (e.g., the state in FIGS.2A and 2B), the first housing 210 and the second housing 220 may form an angle of about 180 degrees, and a first area 230a, a second area 230b, and a folding area 230c of the first display 230 may be substantially coplanar. The first area 230a, the second area 230b, and the folding area 230c of the first display 230 may be oriented in substantially the same direction (e.g., the z-axis direction). As an embodiment, when the electronic device 200 is in the unfolded state, the first housing 210 may rotate by an angle of about 360 degrees with respect to the second housing 220 to be folded in the opposite direction such that the second surface 212 and the fourth surface 222 face each other (e.g., out-folding type).

According to an embodiment, when the electronic device 200 is in the folded state (e.g., the state in FIGS. 2C and 2D), the first surface 211 of the first housing 210 and the third surface 221 of the second housing 220 may be disposed to face each other. In this case, the first area 230a and the second area 230b of the first display 230 may form a narrow angle (e.g., a range of 0 degrees to about 10 degrees) with each other via the folding area 230c and may be disposed to face each other. According to an embodiment, at least a portion of the folding area 230c may be transformed into a curved shape with a predetermined curvature.

According to an embodiment, when the electronic device 200 is in the intermediate state, the first housing 210 and the second housing 220 may be disposed to form a certain angle therebetween. In this case, the first area 230a and the second area 230b of the first display 230 may form an angle that is greater than that in the folded state and smaller than that in the unfolded state, and the curvature of the folding area 230c may be smaller than that in the folded state and greater than that in the unfolded state. In an embodiment, the first housing 210 and the second housing 220 may form an angle that allows the first and second housings to stop at a predetermined folding angle between the folded state and the unfolded state via the at least one hinge device (e.g., free stop function). In an embodiment, the first housing 210 and the second housing 220 may be continuously operated while being pressed in the folding or unfolding direction with reference to a designated inflection angle via at least one hinge device.

According to an embodiment, the electronic device 200 may include at least one of the following components: one or more displays 230 and 235, input devices 215, sound output devices 227 and 228, sensor modules 217a, 217b, and 226, camera modules 216a, 216b, and 225, key input devices 219, indicators (not illustrated), or connector ports 229 which are disposed in or on the first housing 210 and/or the second housing 220. In an embodiment, in the electronic device 200, at least one of the components may be omitted, or at least one other component may be additionally included.

According to an embodiment, the one or more displays 230 and 235 may include a first display 230 (e.g., a flexible display) disposed to be supported by the first surface 211 of the first housing 210 and the third surface 221 of the second housing 220 via the at least one hinge device, and a second display 235 disposed in the inner space of the second housing 220 to be at least partially visible from the outside through the fourth surface 222.

In an embodiment, the second display 235 may be disposed in the inner space of the first housing 210 to be visible from the outside through the second surface 212.

According to an embodiment, the first display 230 may be mainly used when the electronic device 200 is in the unfolded state. The second display 235 may be used even when the electronic device 200 is in the unfolded state.

According to an embodiment, the second display 235 may be mainly used when the electronic device 200 is in the folded state. The first display 230 may be used even when the electronic device 200 is in the folded state.

According to an embodiment, in the intermediate state, the electronic device 200 may be configured to control the availability of the first display 230 and/or the second display 235 based on the folding angle between the first housing 210 and the second housing 220.

According to an embodiment, the first display 230 may be disposed in an accommodation space defined by the pair of housings 210 and 220. For example, the first display 200 may be disposed in the recess 201 defined by the pair of housings 210 and 220, and may be disposed to occupy substantially most of the front surface of the electronic device 200 in the unfolded state. According to an embodiment, the first display 230 may include a flexible display, at least a portion of which is transformable into a flat shape or a curved shape.

According to an embodiment, the first display 230 may include a first area 230a facing the first housing 210 and a second area 230b facing the second housing 220. According to an embodiment, the first display 230 may include a folding area 230c including a portion of the first area 230a and a portion of the second area 230b with reference to the folding axis F.

According to an embodiment, at least a portion of the folding area 230c may include an area corresponding to the at least one hinge device.

According to an embodiment, the area division of the first display 230 is merely an exemplary physical division based on the pair of housings 210 and 220 and the at least one hinge device, and in practice, the first display 230 may display a single seamless entire screen via the pair of housings 210 and 220 and the at least one hinge device.

According to an embodiment, the first area 230a and the second area 230b may have an overall symmetrical shape or a partially asymmetrical shape with respect to the folding area 230c.

According to an embodiment, the electronic device 200 may include a first rear surface cover 240 disposed on the second surface 212 of the first housing 210 and a second rear surface cover 250 disposed on the fourth surface 222 of the second housing 220. In an embodiment, at least a portion of the first rear surface cover 240 may be integrated with the first side surface member 213. In an embodiment, at least a portion of the second rear surface cover 250 may be integrated with the second side surface member 223.

According to an embodiment, at least one of the first rear surface cover 240 and the second rear surface cover 250 may be made of a substantially transparent plate (e.g., a glass plate including various coating layers, or a polymer plate) or an opaque plate. According to an embodiment, the first rear surface cover 240 may be made of, for example, coated or colored glass, ceramic, polymer, metal (e.g., aluminum, stainless steel (STS), or magnesium), or an opaque plate such as a combination of two or more of these materials.

According to an embodiment, the second rear surface cover 250 may be made of a substantially transparent plate such as glass or a polymer. Accordingly, the second display 235 may be disposed in the inner space of the second housing 220 to be visible from the outside through the second rear surface cover 250.

According to an embodiment, the input devices 215 may include a microphone. In an embodiment, the input devices 215 may include a plurality of microphones disposed to detect the direction of sound.

According to an embodiment, the sound output devices 227 and 228 may include speakers. According to an embodiment, the sound output devices 227 and 228 may include a call receiver 227 disposed through the fourth surface 222 of the second housing 220, and an external speaker 228 disposed through at least a portion of the second side surface member 223 of the second housing 220.

In an embodiment, the input devices 215, the sound output devices 227 and 228, and the connector ports 229 may be disposed in spaces of the first housing 210 and/or the second housing 220. The input devices 215, the sound output devices 227 and 228, and the connector ports 229 may be exposed to an external environment through one or more holes formed in the first housing 210 and/or the second housing 220. In an embodiment, the holes formed in the first housing 210 and/or the second housing 220 may be commonly used for the input devices 215 and the sound output devices 227 and 228. In an embodiment, the sound output devices 227 and 228 may include a speaker that operates without holes formed in the first housing 210 and/or the second housing 220 (e.g., a piezo speaker).

According to an embodiment, the camera modules 216a, 216b, and 225 may include a first camera module 216a disposed on the first surface 211 of the first housing 210, a second camera module 216b disposed on the second surface 212 of the first housing 210, and/or a third camera module 225 disposed on the fourth surface 222 of the second housing 220.

According to an embodiment, the electronic device 200 may include a flash 218 located near the second camera module 216b. According to an embodiment, the flash 218 may include, for example, a light-emitting diode or a xenon lamp.

According to an embodiment, the camera modules 216a, 216b, and 225 may include one or more lenses, an image sensor, and/or an image signal processor. In an embodiment, at least one of the camera modules 216a, 216b, and 225 may include two or more lenses (e.g., wide-angle and telephoto lenses) and image sensors, and the camera modules may be disposed together on one surface of the first housing 210 and/or the second housing 220.

According to an embodiment, the sensor modules 217a, 217b, and 226 (e.g., the sensor module 176 in FIG. 1) may generate an electrical signal or a data value corresponding to the internal operating state or the external environmental state of the electronic device 200.

According to an embodiment, the sensor modules 217a, 217b, and 226 (e.g., the sensor module 176 of FIG. 1) may include a first sensor module 217a disposed on the first surface 211 of the first housing 210, a second sensor module 217b disposed on the second surface 212 of the first housing 210, and/or a third sensor module 226 disposed on the fourth surface 222 of the second housing 220.

In an embodiment, the sensor modules 217a, 217b, and 226 (e.g., the sensor module 176 of FIG. 1) may include at least one of a gesture sensor, a grip sensor, a color sensor, an infrared (IR) sensor, an illumination sensor, an ultrasonic sensor, an iris recognition sensor, and a distance detection sensor (e.g., a time-of-flight (TOF) sensor or a light detection and ranging (LiDAR) sensor).

According to an embodiment, a processor (e.g., the processor 120 of FIG. 1) of the electronic device 200 may operate the sensor modules 217a, 217b, and 226 (e.g., the sensor module 176 of FIG. 1) to detect illuminance and/or IR intensity around the electronic device 200. The processor 120 may acquire information regarding the illuminance and the IR intensity around the electronic device 200. For example, the processor 120 may control the operation of a display driver IC (DDIC) (e.g., a display driving driver) so as to change (e.g., adjust or control) the color temperature of the displays 230 and 235 based on information on ambient illuminance and information on IR intensity around the electronic device 200. The DDIC may change (e.g., adjust or control) the color temperature of the displays 230 and 235 under the control of the processor 120.

According to an embodiment, the processor (e.g., the processor 120 of FIG. 1) of the electronic device 200 may operate one or more cameras (e.g., image sensors) to sense a color temperature value around the electronic device 200. The processor 120 may acquire the color temperature value around the electronic device 200. For example, the processor 120 may control the operation of a display driver IC (DDIC) (e.g., a display driving driver) to change (e.g., adjust or control) the color temperature value of the displays 230 and 235 based on information on the color temperature around the electronic device 200. The DDIC may change (e.g., adjust or control) the color temperature of the displays 230 and 235 under the control of the processor 120.

According to an embodiment, the processor (e.g., the processor 120 of FIG. 1) of the electronic device 200 may operate the sensor modules 217a, 217b, and 226 (e.g., the sensor module 176 of FIG. 1) to detect the type of lighting (or light source) around the electronic device 200. The processor 120 may acquire information about the type of lighting (or light source) around the electronic device 200. For example, the processor 120 may control the operation of the DDIC (e.g., a display driving driver) to change (e.g., adjust or control) the color temperature of the displays 230 and 235 based on the information about the lighting (or light source) around the electronic device 200. The DDIC may change (e.g., adjust or control) the color temperature of the displays 230 and 235 under the control of the processor 120.

According to an embodiment, the electronic device 200 may further include at least one of an atmospheric pressure sensor (not illustrated), a magnetic sensor (e.g., a six-axis sensor or a geomagnetic sensor), an acceleration sensor, a biometric sensor, a temperature sensor, a humidity sensor, or a fingerprint recognition sensor. In an embodiment, the fingerprint recognition sensor may be disposed on at least one of the first side surface member 213 of the first housing 210 and the second side surface member 223 of the second housing 220.

According to an embodiment, the key input devices 219 may be disposed to be exposed to the outside through the first side surface member 213 of the first housing 210. In an embodiment, the key input devices 219 may be disposed to be exposed to the outside through the second side surface member 223 of the second housing 220. In an embodiment, the electronic device 200 may not include some or all of the above-mentioned key input devices 219, and a key input device 219, which is not included, may be implemented in another form, such as a soft key, on at least one display 230 or 235. As an embodiment, the key input devices 219 may be implemented by using a pressure sensor included in the at least one display 230 or 235.

According to an embodiment, the connector port 229 may include a connector (e.g., a USB connector or an interface connector port module (IF module)) configured to transmit/receive power and/or data to/from an external electronic device. In an embodiment, the connector ports 229 may be configured to perform a function for transmitting/receiving an audio signal to and from the external electronic device, or may further include a separate connector port (e.g., an ear jack hole) configured to perform an audio signal transmitting/receiving function.

According to an embodiment, at least one camera module 216a or 225 among the camera modules 216a, 216b, and 225, at least one sensor module 217a or 226 among the sensor modules 217a, 217b, and 226, and/or an indicator may be disposed to be visually exposed through the at least one display 230 or 235. For example, at least one camera module 216a or 225, at least one sensor module 217a or 226, and/or an indicator may be disposed under a display area of at least one display 230 or 235 in an inner space of at least one housing 210 or 220. At least one camera module 216a or 225, at least one sensor module 217a or 226, and/or the indicator may be disposed to come into contact with an external environment through an opening or a transparent area perforated through or formed in a cover member (e.g., a window layer (not illustrated) of the first display 230 and/or the second rear surface cover 250).

According to an embodiment, an area in which the at least one display 230 or 235 and the at least one camera module 216a or 225 face each other may be provided as a transmissive area with a predetermined transmittance, as a portion of a content display area.

According to an embodiment, the transmissive area may have a transmittance ranging from about 5% to about 20%. The transmissive area may include an area overlapping the effective area (e.g., a view angle area) of the at least one camera module 216a or 225 through which light imaged by an image sensor to generate an image passes. For example, the transmissive area of the display 230 or 235 may include an area having a lower pixel density than the periphery. For example, the transmissive area may replace an opening. For example, the at least one camera module 216a or 225 may include an under-display camera (UDC) or an under-panel camera (UPC). As an embodiment, some camera modules or sensor modules 217a and 226 may be disposed to perform the functions thereof without being visually exposed through a display. For example, the areas facing the camera modules 216a and 225 and/or the sensor modules 217a and 226 disposed under the displays 230 and 235 (e.g., a display panel) may have an under-display camera (UDC) structure, and may not require a perforated opening.

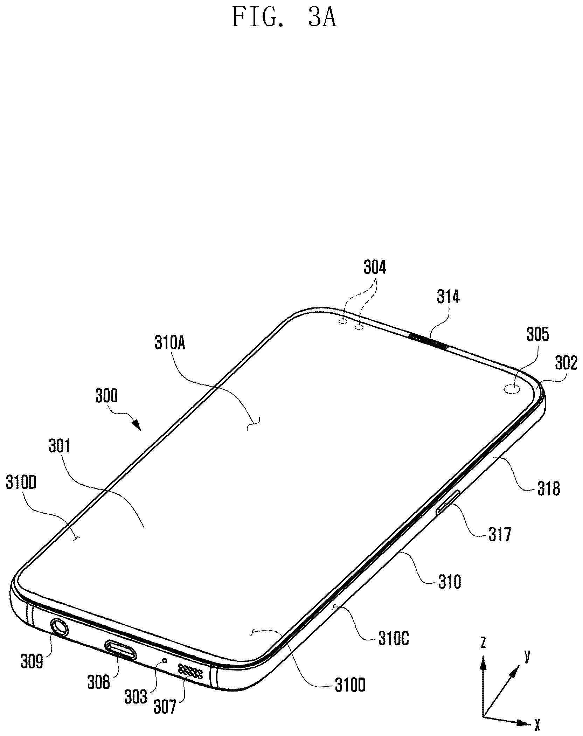

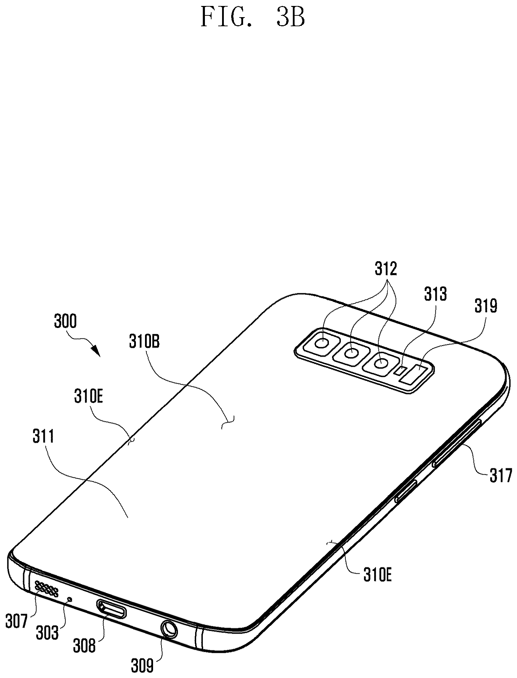

FIG. 3A is a perspective view of an electronic device according to an embodiment of the disclosure illustrating a first surface (e.g., the front surface) thereof. FIG. 3B is a perspective view of the electronic device according to an embodiment of the disclosure illustrating a second surface (e.g., the rear surface) thereof.

Referring to FIGS. 3A and 3B, an electronic device 300 (e.g., the electronic device 101 in FIG. 1) according to an embodiment of the disclosure may include a first surface (or a front surface) 310A and a second surface (or a rear surface) 310B, and a housing 310. According to an embodiment of the disclosure, the electronic device 300 (e.g., the electronic device 101 of FIG. 1) may include a display 301.

According to an embodiment, the display 301 may be supported by the housing 310. For example, the display 301 may include a liquid crystal display (LCD) display, an organic light-emitting diode (OLED) display, or a micro light-emitting diode (micro LED) display.

According to an embodiment, the housing 310 may include a side surface 310C surrounding a space between the first surface 310A and the second surface 310B. According to an embodiment, the housing 310 may also refer to a structure that at least partially forms the first surface 310A, the second surface 310B, and the side surface 310C.

According to an embodiment, at least a portion of the first surface 310A may be defined by a substantially transparent front surface plate 302 (e.g., a glass plate or a polymer plate including various coating layers).

According to an embodiment, the second surface 310B may be defined by a substantially opaque rear surface plate 311. The rear surface plate 311 may be made of, for example, coated or colored glass, ceramic, polymer, metal (e.g., aluminum, stainless steel (STS), or magnesium), or a combination of two or more of these materials. However, the disclosure is not limited thereto, and the rear plate 311 may be formed of transparent glass.

According to an embodiment, the side surface 310C may be defined by a side surface bezel structure 318 (or a "side surface member") coupled to the front surface plate 302 and the rear surface plate 311 and including metal and/or polymer. According to an embodiment, the rear surface plate 311 and the side surface bezel structure 318 may be integrated with each other and may include the same material (e.g., a metal material such as aluminum).

According to an embodiment, the front surface plate 302 may include two first areas 310D that are curved from the first surface 310A toward the rear surface plate 311 and extend seamlessly. The two first areas 310D may be disposed at opposite long edge ends of the front surface plate 302.

According to an embodiment, the rear surface plate 311 may include two second areas 310E that are curved from the second surface 310B toward the front surface plate 302 and extend seamlessly.

According to an embodiment, the front surface plate 302 (or the rear surface plate 311) may include only one of the first areas 310D (or the second areas 310E). According to an embodiment, some of the first areas 310D or the second areas 310E may not be included.

In some embodiments, when viewed from a side of the electronic device 300, the side surface bezel structure 318 may have a first thickness (or width) at a side where the first areas 310D or the second areas 310E as described above are not included. In some embodiments, when viewed from a side of the electronic device 300, the side surface bezel structure 318 may have a second thickness (or width) smaller than the first thickness at a side surfaces where the first areas 310D or the second areas 310E are included.

According to an embodiment, the electronic device 300 may include at least one of a display 301, an sound input device 303 (e.g., the input module 150 of FIG. 1, a microphone), sound output devices 307 and 314 (e.g., the sound output module 155 of FIG. 1 or a speaker) (e.g., an audio module), sensor modules 304 and 319 (e.g., the sensor module 176 of FIG. 1), camera modules 305 and 312 (e.g., the camera module 180 of FIG. 1), a flash 313, a key input device 317, an indicator (not illustrated), and connectors 308 and 309. According to an embodiment, the electronic device 300 may omit at least one of the components (e.g., the key input device 317) or additionally include other components.

According to an embodiment, the display 301 may be visually exposed through an upper end portion of the front surface plate 302.

According to an embodiment, at least a portion of the display 301 may be visible through the front surface plate 302 that forms the first surface 310A and the first areas 310D of the side surface 310C. The display 301 may be coupled to or disposed adjacent to a touch detection circuit, a pressure sensor configured to measure a touch intensity (pressure), and/or a digitizer configured to detect a magnetic field-type electronic pen (e.g., stylus pen).

According to an embodiment, at least one of the first sensor module 304, the camera modules 305 and 312 (e.g., image sensors), the sound output device 314 (e.g., an audio module), and a fingerprint sensor may be provided on the rear surface of a screen display area of the display 301.

According to an embodiment, the display 301 may be coupled to or disposed adjacent to a touch detection circuit, a pressure sensor configured to measure a touch intensity (pressure), and/or a digitizer configured to detect a magnetic field-type electronic pen (e.g., stylus pen).

According to an embodiment, at least a portion of the sensor modules 304 and 319 and/or at least a portion of the key input device 317 may be disposed in the first areas 310D and/or the second areas 310E.

According to an embodiment, the sound input device 303 may include a microphone. According to an embodiment, the sound input device 303 may include a plurality of microphones arranged to detect the direction of sound.

According to an embodiment, the sound output devices 307 and 314 may include a sound output device 307 operating as an external speaker and a sound output device 314 operating as a call receiver.

In an embodiment, the sound input device 303 (e.g., a microphone), the sound output devices 307 and 314, and the connectors 308 and 309 may be disposed in an inner space of the electronic device 300. The sound input device 303 (e.g., a microphone), the sound output devices 307 and 314, and the connectors 308 and 309 may be exposed to an external environment through at least one hole formed in the housing 310. In an embodiment, the holes formed in the housing 310 may be commonly used for the sound input device 303 (e.g., a microphone) and the sound output devices 307 and 314. In an embodiment, the sound output devices 307 and 314 may include a speaker that operates without a hole provided in the housing 310 (e.g., a piezo speaker).

According to an embodiment, the sensor modules 304 and 319 (e.g., the sensor module 176 in FIG. 1) may generate an electrical signal or a data value corresponding to the internal operating state or the external environmental state of the electronic device 300. The sensor modules 304 and 319 may include a first sensor module 304 (e.g., a proximity sensor) arranged on the first surface 310A of the housing 310, a second sensor module 319 (e.g., an HRM sensor) arranged on the second surface 310B of the housing 310, and/or a third sensor module (not illustrated) (e.g., a fingerprint sensor). For example, the fingerprint sensor may be arranged on the first surface 310A (e.g., the display 301) and/or the second surface 310B of the housing 310.

In an embodiment, the sensor modules 304 and 319 (e.g., the sensor module 176 of FIG. 1) may include at least one of a gesture sensor, a grip sensor, a color sensor, an infrared (IR) sensor, an illumination sensor, an ultrasonic sensor, an iris recognition sensor, and a distance detection sensor (e.g., a time-of-flight (TOF) sensor or a light detection and ranging (LiDAR) sensor).

According to an embodiment, a processor (e.g., the processor 120 of FIG. 1) of the electronic device 300 may operate the sensor modules 304 and 319 (e.g., the sensor module 176 of FIG. 1) to detect illuminance and/or IR intensity around the electronic device 300. The processor 120 may acquire information regarding the illuminance and the IR intensity around the electronic device 300. For example, the processor 120 may control the operation of a display driver IC (DDIC) (e.g., a display driving driver) so as to change (e.g., adjust or control) the color temperature of the display 301 based on information on ambient illuminance and information on IR intensity around the electronic device 300. The DDIC may change (e.g., adjust or control) the color temperature of the display 301 under the control of the processor 120.

According to an embodiment, the processor (e.g., the processor 120 of FIG. 1) of the electronic device 300 may operate one or more camera modules 305 and 312 (e.g., image sensors) to sense a color temperature value around the electronic device 300. The processor 120 may acquire the color temperature value around the electronic device 300. For example, the processor 120 may control the operation of a display driver IC (DDIC) (e.g., a display driving driver) to change (e.g., adjust or control) the color temperature value of the display 301 based on information on the color temperature around the electronic device 300. The DDIC may change (e.g., adjust or control) the color temperature of the display 301 under the control of the processor 120.

According to an embodiment, the processor (e.g., the processor 120 of FIG. 1) of the electronic device 300 may operate the sensor modules 304 and 319 (e.g., the sensor module 176 of FIG. 1) to detect the type of lighting (or light source) around the electronic device 300. The processor 120 may acquire information about the type of lighting (or light source) around the electronic device 300. For example, the processor 120 may control the operation of the DDIC (e.g., a display driving driver) to change (e.g., adjust or control) the color temperature of the display 301 based on the information about the lighting (or light source) around the electronic device 300. The DDIC may change (e.g., adjust or control) the color temperature of the display 301 under the control of the processor 120.

According to an embodiment, the electronic device 300 may further include at least one of an atmospheric pressure sensor (not illustrated), a magnetic sensor (e.g., a six-axis sensor or a geomagnetic sensor), an acceleration sensor, a biometric sensor, a temperature sensor, a humidity sensor, or a fingerprint recognition sensor.

According to an embodiment, the camera modules 305 and 312 may include a first camera module 305 arranged on the first surface 310A of the electronic device 300, and a second camera module 312 arranged on the second surface 310B of the electronic device 200. A flash 313 may be disposed around the camera modules 305 and 312. The camera modules 305 and 312 may include one or more lenses, an image sensor, and/or an image signal processor. The flash 313 may include, for example, a light-emitting diode or a xenon lamp.

According to an embodiment, the first camera module 305 may be arranged under the display panel of the display 301 in a manner of an under-display camera (UDC). According to an embodiment, two or more lenses (a wide-angle lens and a telephoto lens) and image sensors may be arranged on one surface of the electronic device 300. According to an embodiment, a plurality of first camera modules 305 may be disposed on the first surface of the electronic device 300 (e.g., the surface on which a screen is to be displayed) in an under-display camera (UDC) manner.

According to an embodiment, key input devices 317 may be disposed on the side surface 310C of the housing 310. According to an embodiment, the electronic device 300 may not include some or all of the above-mentioned key input devices 317, and the key input devices 317, which are not included in the electronic device 301, may be implemented in another form, such as soft keys, on the display 301. According to an embodiment, the key input devices 317 may be implemented using pressure sensors included in the display 301.

According to an embodiment, the connector holes 308 and 309 may include a first connector hole 308 capable of accommodating a connector (e.g., a USB connector) configured to transmit/receive power and/or data to/from an external electronic device, and/or a second connector hole 309 (or an earphone jack) capable of accommodating a connector configured to transmit/receive audio signals to/from an external electronic device. The first connector hole 308 may include a universal serial bus (USB) A type or a USB C type port. When the first connector hole 308 supports the USB C type, the electronic device 300 (e.g., the electronic device 101 of FIG. 1 or the electronic device 200 of FIG. 2A) may support USB power delivery (PD) charging.

According to an embodiment, a first camera module 305 among the camera modules 305 and 312 and/or a first sensor module 304 among the sensor modules 304 and 319 may be disposed to be visually exposed through the display 301.

According to an embodiment, when the first camera module 305 is disposed in an under display camera (UDC) manner, the first camera module 305 may not be visually exposed to the outside.

According to an embodiment, the first camera module 305 may be disposed to overlap the display area, and a screen may be displayed even in a display area corresponding to the first camera module 305. The first sensor module 304 may be disposed to execute their functions in the internal space of the electronic device 300 without being visually exposed through the front surface plate 302.

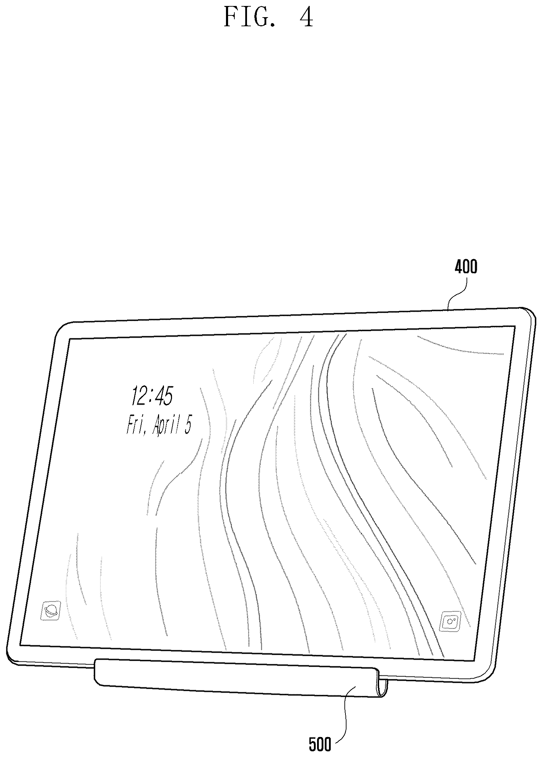

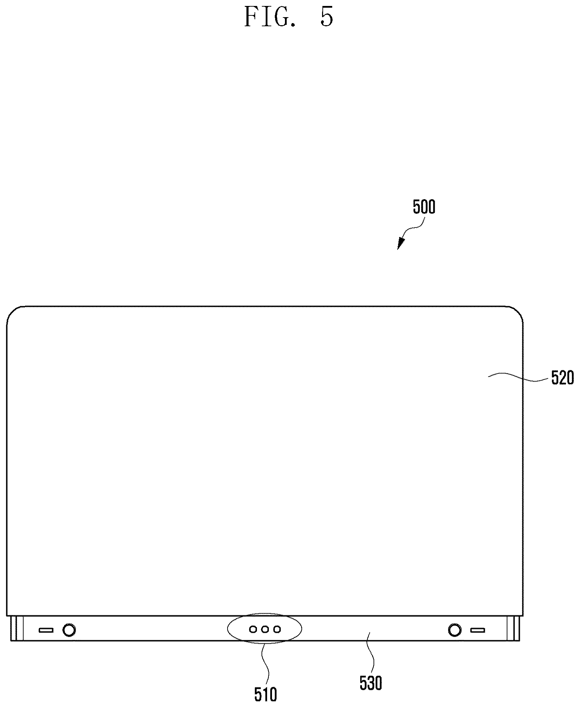

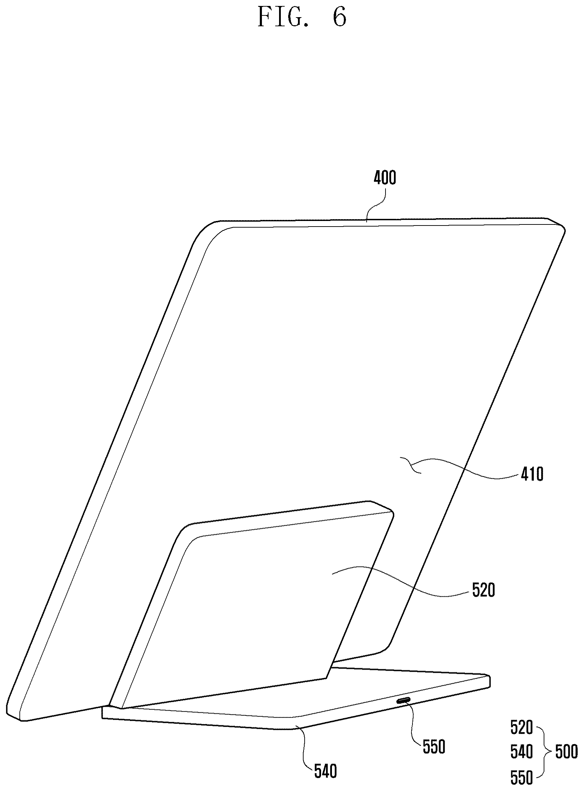

FIG. 4 is a view illustrating a first surface (e.g., a front surface) in a state in which an electronic device is mounted on a docking device (e.g., a pogo pin dock device). FIG. 5 is a view illustrating the docking device (e.g., a pogo pin dock device) including a pogo pin unit illustrated in FIG. 4. FIG. 6 is a view illustrating a second surface (e.g., a rear surface) in a state in which an electronic device is mounted on the docking device (e.g., a pogo pin dock device).

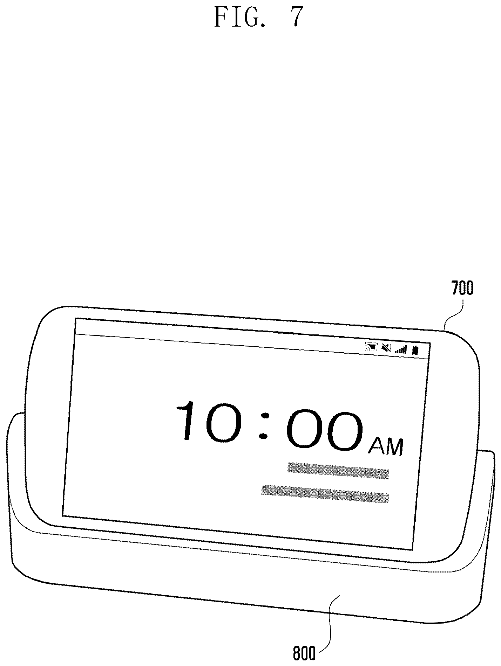

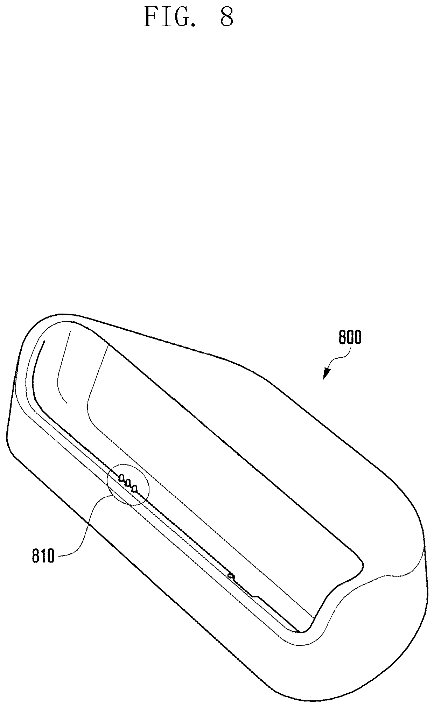

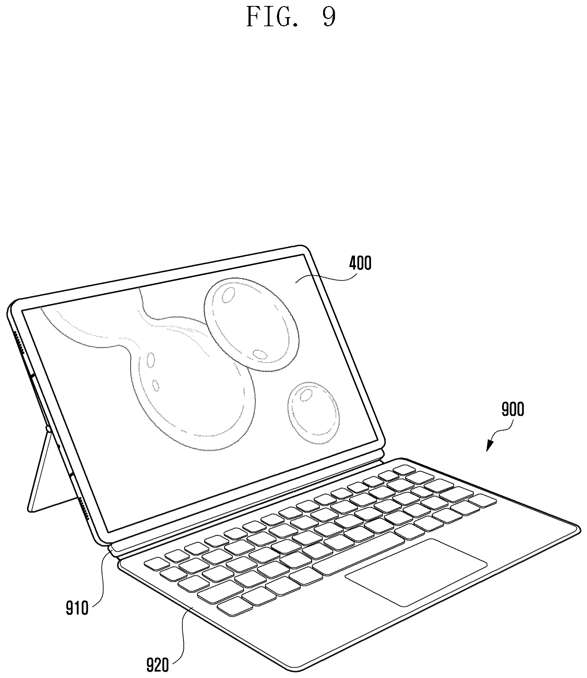

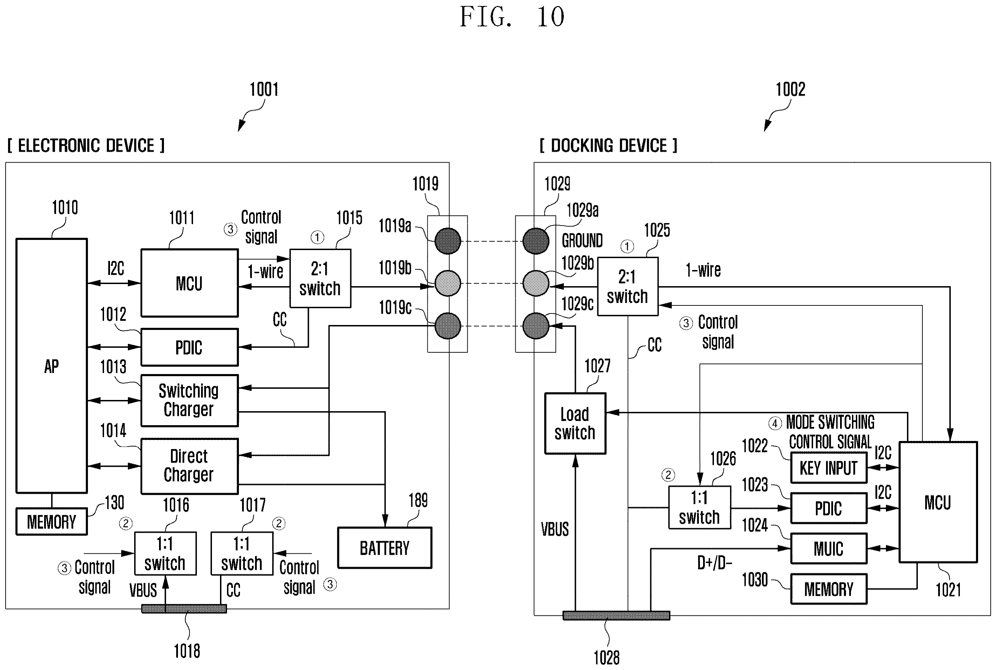

Referring to FIGS. 4 to 6, an electronic device 400 (e.g., a tablet PC) (e.g., the electronic device 101 of FIG. 1, the electronic device 200 of FIGS. 2A to 2D, the electronic device 300 of FIGS. 3A and 3B, the electronic device 700 of FIG. 7, the electronic device 400 of FIG. 9, or the electronic device 1001 of FIG. 10) may be mounted (e.g., placed) on a docking device 500 (e.g., the docking device 800 of FIGS. 7 and 8, the keyboard docking device 900 of FIG. 9, or the docking device 1002 of FIG. 10). For example, at least a portion of the electronic device 101, 200, 300, 400, 700, or 1001 may be inserted into a mounting groove 530 of the docking device 500, 800, 900, or 1002. The rear surface 410 of the electronic device 101, 200, 300, 400, 700, or 1001 may be supported on a mounting surface 520 of the docking device 500, 800, 900, or 1002, so that the electronic device 101, 200, 300, 400, 700, or 1001 may be mounted on the mounting surface 520 of the docking device 500, 800, 900, or 1002.

For example, a support portion 540 of the docking device 500, 800, 900, or 1002 may be placed on a floor surface so as to support the docking device 500, 800, 900, or 1002. For example, a charging port 550 (e.g., the charging port 1028 of FIG. 10) may be disposed on at least a portion of the support portion 540.

According to an embodiment, the electronic device 101, 200, 300, 400, 700, or 1001 may include a pogo pin pad unit 510 (e.g., the pogo pin pad unit 1019 of FIG. 10). The pogo pin pad unit 1019 of the electronic device 101, 200, 300, 400, 700, or 1001 may include a ground pogo pin pad (e.g., the ground pogo pin pad 1019a of FIG. 10), a communication pogo pin pad (e.g., the communication pogo pin pad 1019b of FIG. 10), and a power pogo pin pad (e.g., the power pogo pin pad 1019c of FIG. 10) (e.g., a VBUS pogo pin pad).

According to an embodiment, the docking device 500, 800, 900, or 1002 may include a pogo pin unit 1029.

According to an embodiment, the pogo pin unit 510 or 1029 of the docking device 500, 800, 900, or 1002 may include a ground pogo pin (e.g., the ground pogo pin 1029a of FIG. 10), a communication pogo pin (e.g., the communication pogo pin 1029b of FIG. 10), and a power pogo pin (e.g., the power pogo pin 1029c of FIG. 10) (e.g., a VBUS pogo pin).

According to an embodiment, when the electronic device 101, 200, 300, 400, 700, or 1001 is mounted (e.g., placed) on the docking device 500, 800, 900, or 1002, the pogo pin pad unit 1019 of the electronic device 101, 200, 300, 400, 700, or 1001 may be electrically connected to the pogo pin unit 1029 of the docking device 500, 800, 900, or 1002.

FIG. 7 is a view illustrating a state in which an electronic device is mounted on a docking device (e.g., a pogo pin dock device). FIG. 8 is a view illustrating the docking device including a pogo pin unit illustrated in FIG. 7.

Referring to FIGS. 7 and 8, an electronic device 700 (e.g., a smartphone) (e.g., the electronic device 101 of FIG. 1, the electronic device 200 of FIGS. 2A to 2D, the electronic device 300 of FIGS. 3A and 3B, the electronic device 400 of FIG. 4, the electronic device 400 of FIG. 9, or the electronic device 1001 of FIG. 10) may be mounted (e.g., placed) on a docking device 800 (e.g., the docking device 800 of FIGS. 7 and 8, the keyboard docking device 900 of FIG. 9, or the docking device 1002 of FIG. 10). For example, a charging port (e.g., the charging port 1028 of FIG. 10) may be disposed on at least a portion of the docking device 500, 800, 900, or 1002.

According to an embodiment, the electronic device 101, 200, 300, 400, 700, or 1001 may include a pogo pin pad unit (e.g., the pogo pin pad unit 1019 of FIG. 10). The pogo pin pad unit 1019 of the electronic device 101, 200, 300, 400, 700, or 1001 may include a ground pogo pin pad (e.g., the ground pogo pin pad 1019a of FIG. 10), a communication pogo pin pad (e.g., the communication pogo pin pad 1019b of FIG. 10), and a power pogo pin pad (e.g., the power pogo pin pad 1019c of FIG. 10) (e.g., a VBUS pogo pin pad).

According to an embodiment, the docking device 500, 800, 900, or 1002 may include a pogo pin unit 810 or 1029.

According to an embodiment, the pogo pin unit 810 or 1029 of the docking device 500, 800, 900, or 1002 may include a ground pogo pin (e.g., the ground pogo pin 1029a of FIG. 10), a communication pogo pin (e.g., the communication pogo pin 1029b of FIG. 10), and a power pogo pin (e.g., the power pogo pin 1029c of FIG. 10) (e.g., a VBUS pogo pin).

According to an embodiment, when the electronic device 101, 200, 300, 400, 700, or 1001 is mounted (e.g., placed) on the docking device 500, 800, 900, or 1002, the pogo pin pad unit 1019 of the electronic device 101, 200, 300, 400, 700, or 1001 may be electrically connected to the pogo pin unit 1029 of the docking device 500, 800, 900, or 1002.

FIG. 9 is a view illustrating a state in which a keyboard docking device is connected to an electronic device.

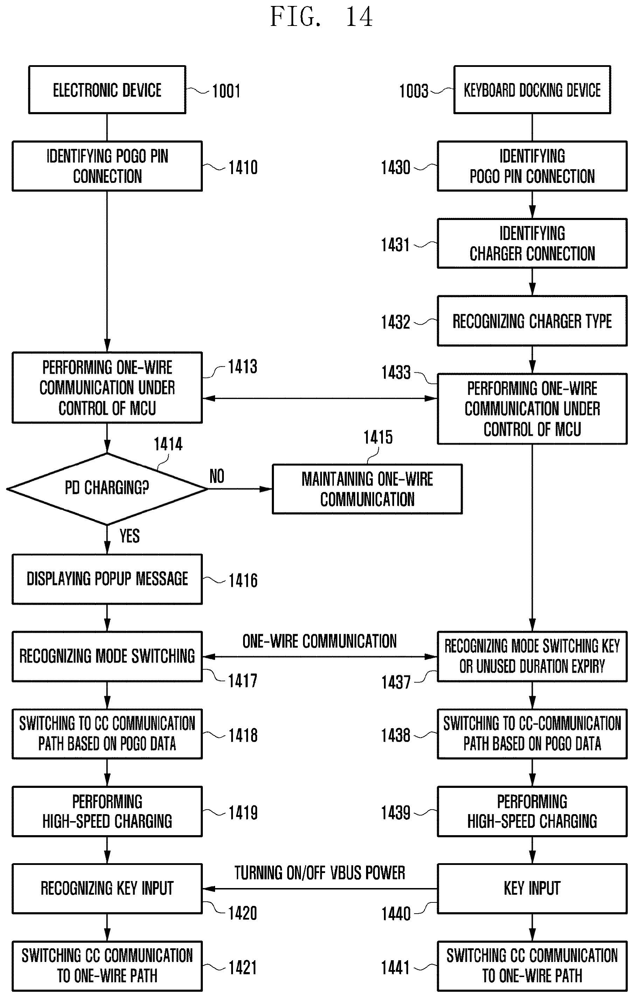

Referring to FIG. 9, an electronic device 400 (e.g., a tablet PC) (e.g., the electronic device 101 of FIG. 1, the electronic device 200 of FIGS. 2A to 2D, the electronic device 300 of FIGS. 3A and 3B, the electronic device 400 of FIG. 4, or the electronic device 1001 of FIG. 10) may be mounted (e.g., placed) on a keyboard docking device 900 (e.g., the keyboard docking device 1003 of FIG. 14).

For example, the keyboard docking device 900 or 1003 may include a connecting portion 910 that electrically connects the electronic device 101, 200, 300, 400, 700, or 1001 to the keyboard docking device 900 or 1003, and a keyboard 920. For example, a charging port (e.g., the charging port 1028 of FIG. 10) may be disposed on at least a portion of the keyboard docking device 900 or 1003.

According to an embodiment, the electronic device 101, 200, 300, 400, 700, or 1001 may include a pogo pin pad unit (e.g., the pogo pin pad unit 1019 of FIG. 10). The pogo pin pad unit 1019 of the electronic device 101, 200, 300, 400, 700, or 1001 may include a ground pogo pin pad (e.g., the ground pogo pin pad 1019a of FIG. 10), a communication pogo pin pad (e.g., the communication pogo pin pad 1019b of FIG. 10), and a power pogo pin pad (e.g., the power pogo pin pad 1019c of FIG. 10) (e.g., a VBUS pogo pin pad).

According to an embodiment, the keyboard docking device 900 or 1003 may include a pogo pin unit (e.g., the pogo pin unit 1029 of FIG. 10).

According to an embodiment, the pogo pin unit 1029 of the keyboard docking device 900 or 1003 may include a ground pogo pin (e.g., the ground pogo pin 1029a of FIG. 10), a communication pogo pin (e.g., the communication pogo pin 1029b of FIG. 10), and a power pogo pin (e.g., the power pogo pin 1029c of FIG. 10) (e.g., a VBUS pogo pin).

According to an embodiment, when the electronic device 101, 200, 300, 400, 700, or 1001 is mounted (e.g., placed) on the keyboard docking device 900 or 1003, the pogo pin pad unit 1019 of the electronic device 101, 200, 300, 400, 700, or 1001 may be electrically connected to the pogo pin unit 1029 of the keyboard docking device 900 or 1003.

FIG. 10 is a view illustrating an electronic device and a docking device according to an embodiment of the disclosure.

Referring to FIG. 10, an electronic device 1001 (e.g., the electronic device 101 of FIG. 1, the electronic device 200 of FIGS. 2A to 2D, the electronic device 300 of FIGS. 3A and 3B, the electronic device 400 of FIG. 4, the electronic device 700 of FIG. 7, or the electronic device 400 of FIG. 9) and a docking device 1002 (e.g., the docking device 500 of FIGS. 4 and 5, the docking device 800 of FIGS. 7 and 8, or the keyboard docking device 900 of FIG. 9) may be electrically connected, so as to enable charging of the electronic device 1001 and transmission/reception of data.

According to an embodiment, the electronic device 1001, 101, 200, 300, 400, or 700 may include a processor 1010 (e.g., an application processor (AP), the processor 120 of FIG. 1), a controller 1011 (e.g., a microcontroller unit (e.g., an MCU)), a power delivery integrated circuit (PDIC) 1012, a switching charger 1013, a direct charger 1014, a first switch 1015 (e.g., a 2:1 switch), a second switch 1016 (e.g., a 1:1 switch), a third switch 1017 (e.g., a 1:1 switch), a charging port 1018, a pogo pin pad unit 1019, memory 130 (e.g., the memory 130 of FIG. 1), and a battery 189 (e.g., the battery 189 of FIG. 1).

For example, a part or the entirety of the PDIC 1012 may be included in the controller 1011 (e.g., an MCU). For example, a part or the entirety of the PDIC 1012 and the controller 1011 (e.g., an MCU) may be included in the processor 1010. The electronic device 1001, 101, 200, 300, 400, or 700 may include a first communication line (e.g., a one-wire communication line) and a second communication line (e.g., a CC communication line or a PD communication line).

According to an embodiment, the docking device 1002, 500, 800, or 900 may include a controller 1021 (e.g., a microcontroller unit (e.g., an MCU)), a power delivery integrated circuit (PDIC) 1023, a micro USB integrated circuit (MUIC) 1024, a first switch 1025 (e.g., a 2:1 switch), a second switch 1026 (e.g., a 1:1 switch), a third switch 1027 (e.g., a load switch), a charging port 1028 (e.g., the charging port 550 of FIG. 6), a pogo pin unit 1029 (e.g., the pogo pin unit 510 of FIG. 5 or the pogo pin unit 810 of FIG. 8), and memory 1030. For example, a part or the entirety of the PDIC 1023 and the MUIC 1024 may be included in the controller 1021 (e.g., an MCU). For example, the docking device 1002, 500, 800, or 900 may include a first communication line (e.g., a one-wire communication line) and a second communication line (e.g., a CC communication line or a PD communication line).

For example, the docking device 1002, 500, 800, or 900 may additionally include a keyboard (e.g., the keyboard 920 of FIG. 9). When the docking device 1002, 500, 800, or 900 includes the keyboard 920, a charging mode may be switched to a keyboard use mode based on a key input 1022 from the keyboard 920. For example, when the docking device 1002, 500, 800, or 900 includes the keyboard 920, a keyboard use mode may be switched to a charging mode based on the key input 1022 from the keyboard 920.

According to an embodiment, the pogo pin pad unit 1019 of the electronic device 1001, 101, 200, 300, 400, or 700 may include a ground pogo pin pad 1019a, a communication pogo pin pad 1019b, and a power pogo pin pad 1019c (e.g., a VBUS pogo pin pad). The pogo pin unit 1029, 510, or 810 of the docking device 1002, 500, 800, or 900 may include a ground pogo pin 1029a, a communication pogo pin 1029b, and a power pogo pin 1029c (e.g., a VBUS pogo pin).

According to an embodiment, when the electronic device 1001, 101, 200, 300, 400, or 700 is mounted (or placed) on the docking device 1002, 500, 800, or 900, the pogo pin pad unit 1019 and the pogo pin unit 1029 may be electrically connected. The electronic device 1001, 101, 200, 300, 400, or 700 and the docking device 1002, 500, 800, or 900 may be electrically connected via the pogo pin pad unit 1019 and the pogo pin unit 1029.

For example, the ground pogo pin pad 1019a of the electronic device 1001, 101, 200, 300, 400, or 700 may be electrically connected to the ground pogo pin 1029a of the docking device 1002, 500, 800, or 900. The communication pogo pin pad 1019b of the electronic device 1001, 101, 200, 300, 400, or 700 may be electrically connected to the communication pogo pin 1029b of the docking device 1002, 500, 800, or 900. The power pogo pin pad 1019c of the electronic device 1001, 101, 200, 300, 400, or 700 may be electrically connected to the power pogo pin 1029c of the docking device 1002, 500, 800, or 900. The pogo pin pad unit 1019 of the electronic device 1001 and the pogo pin unit 1029, 510, or 810 of the docking device 1002, 500, 800, or 900 may be electrically connected, so as to enable charging of the electronic device 1001 and transmission and reception of data.

According to an embodiment, the controller 1021 (e.g., an MCU) of the docking device 1002, 500, 800, or 900 may be operatively connected to the PDIC 1023, the MUIC 1024, the first switch 1025, the third switch 1027, and the memory 1030. For example, the controller 1021 (e.g., an MCU) of the docking device 1002, 500, 800, or 900 may control operations of the PDIC 1023, MUIC 1024, the first switch 1025, and the third switch 1027. For example, the memory 1030 may store instructions for causing the controller 1021 (e.g., an MCU) of the docking device 1002, 500, 800, or 900 to control operations of the PDIC 1023, the MUIC 1024, the first switch 1025, and/or the third switch 1027.

For example, operations of the controller 1021 (e.g., an MCU), the PDIC 1023, and the MUIC 1024 may be performed by loading instructions stored in the memory 1030.

According to an embodiment, the memory 1030 may include main memory and storage (or auxiliary memory). The main memory may be configured as a volatile memory such as a dynamic random access memory (DRAM), a static RAM (SRAM), or a synchronous dynamic RAM (SDRAM). The storage may include at least one of a one-time programmable ROM (OTPROM), a PROM, an EPROM, an EEPROM, a mask ROM, a flash ROM, a flash memory, a hard drive, or a solid state drive (SSD).

According to an embodiment, the memory 1030 may be a non-volatile memory and may include a large-capacity storage device. For example, the memory 130 may include at least one of a one-time programmable ROM (OTPROM), a PROM, an EPROM, an EEPROM, a mask ROM, a flash ROM, a flash memory, a hard drive, or a solid state drive (SSD). The memory 1030 may store various file data, and the stored file data may be updated according to operations of the controller 1021 (e.g., an MCU), the PDIC 1023, and the MUIC 1024.

According to an embodiment, the controller 1021 (e.g., an MCU) of the docking device 1002, 500, 800, or 900 may be maintained at or switched to first communication (e.g., one-wire communication) to enable communication via a pogo data line (POGO_DATA line), based on input from a charger or a key input 1022 from a keyboard (e.g., the keyboard 920 of FIG. 9). For example, when the first communication (e.g., one-wire communication) is established prior to the input from the charger or the key input 1022 from the keyboard (e.g., the keyboard 920 of FIG. 9), the first communication (e.g., one-wire communication) may be maintained to enable communication via the pogo data line (POGO_DATA line). For example, when the second communication (e.g., CC communication or PD communication) is established prior to the input from the charger or the key input 1022 from the keyboard (e.g., the keyboard 920 of FIG. 9), the communication may be converted to the first communication (e.g., one-wire communication) to enable communication via the pogo data line (POGO_DATA line).

For example, the controller 1021 (e.g., an MCU) of the docking device 1002, 500, 800, or 900 may generate switch control signals to control the on/off of the first switch 1025, the second switch 1026, and the third switch 1027. For example, the controller 1021 (e.g., an MCU) may input a switch control signal to the first switch 1025 to control the on/off of the first switch 1025. For example, the controller 1021 (e.g., an MCU) may input a switch control signal to the second switch 1026 to control the on/off of the second switch 1026. For example, the controller 1021 (e.g., an MCU) may input a switch control signal to the third switch 1027 to control the on/off of the third switch 1027.

For example, the controller 1021 (e.g., an MCU) may generate a mode switching control signal for switching to a charging mode (or switching to a keyboard use mode. Based on the mode switching control signal, a charging mode may be used when a keyboard 920 capable of being connected to a charger is used.

For example, based on the mode switching control signal, the mode may be switched from the charging mode to a keyboard use mode in which keyboard use is enabled. The controller 1021 (e.g., an MCU) may control the operation (e.g., on/off) of the third switch 1027 using the mode switching control signal. The mode switching control signal of the controller 1021 (e.g., an MCU) may be provided to the processor 1010 and/or the controller 1011 (e.g., an MCU) of the electronic device 1001, 101, 200, 300, 400, or 700. The controller 1021 (e.g., an MCU) may provide the mode switching control signal to the processor 1010 and/or the controller 1011 (e.g., an MCU) of the electronic device 1001, 101, 200, 300, 400, or 700, so as to notify switching of the charging mode (or switching to a keyboard use mode). The processor 1010 of the electronic device 1001, 101, 200, 300, 400, or 700 may recognize switching of the charging mode (or switching to a keyboard use mode) based on the input mode switching control signal.

According to an embodiment, the PDIC 1023 of the docking device 1002, 500, 800, or 900 may include a circuit configured to operate in accordance with the USB Type-C specification. For example, the PDIC 1023 may determine whether the charger is a USB Type-C charger based on second communication (e.g., CC communication or PD communication) input through the charging port 1028 (e.g., a USB Type-C connector). The PDIC 1023 may provide data about the charging type of the charger to the controller 1021 (e.g., an MCU).

For example, the PDIC 1023 and the controller 1021 (e.g., an MCU) may recognize the type of the charger and communication data, ground, and power input from the charging port 1028.

According to an embodiment, when a charger is connected to the charging port 1028, the docking device 1002, 500, 800, or 900 may determine whether to switch the communication path to first communication (e.g., one-wire communication) or to second communication (e.g., CC communication or PD communication).

For example, when a charger is connected to the charging port 1028 and D+/D- pins, a GND pin, and a power pin are connected to the charging port 1028, the communication path may be switched to first communication (e.g., one-wire communication), or the first communication (e.g., one-wire communication) may be maintained.

For example, when a charger is connected to the charging port 1028 and the CC pin, GND pin, and power pin are connected to the charging port 1028, the communication path may be switched to second communication (e.g., CC communication or PD communication), or maintained as the second communication (e.g., CC communication or PD communication).

For example, the docking device 1002, 500, 800, or 900 may provide data regarding the switching of the communication path, indicating whether the path is for first communication (e.g., one-wire communication) or second communication (e.g., CC communication or PD communication), to the electronic device 1001, 101, 200, 300, 400, or 700. The electronic device 1001, 101, 200, 300, 400, or 700 may acquire the data regarding the switching of the communication path from the docking device 1002, 500, 800, or 900. The electronic device 1001, 101, 200, 300, 400, or 700 may switch the communication path to the first communication (e.g., one-wire communication) path or the second communication (e.g., CC communication or PD communication) path based on the data regarding the switching of the communication path.

According to an embodiment, the MUIC 1024 may include a circuit configured to perform micro USB connection. For example, the MUIC 1024 may perform data communication (e.g., D+/D- communication) input through the charging port 1028 (e.g., a USB Type-C connector). The MUIC 1024 may provide the D+/D-communication data input through the charging port 1028 (e.g., a USB Type-C connector) to the controller 1021 (e.g., an MCU).

According to an embodiment, the first switch 1025 (e.g., a 2:1 switch) of the docking device 1002, 500, 800, or 900 may be electrically connected to the controller 1021 (e.g., an MCU) and the pogo pin unit 1029, 510, or 810. For example, the first switch 1025 may divide (e.g., branch) a communication path to allow the pogo data line signal to support either first communication (e.g., one-wire communication) or second communication (e.g., CC communication or PD communication), under the control of the controller 1021 (e.g., an MCU). For example, a communication path signal (e.g., a one-wire communication signal or a PD communication signal) may be transmitted from the communication pogo pin 1029b of the docking device 1002, 500, 800, or 900 to the communication pogo pin pad 1019b of the electronic device 1001, 101, 200, 300, 400, or 700. For example, when the communication path is configured for first communication (e.g., one-wire communication), the communication path signal transmitted from the communication pogo pin 1029b of the docking device 1002, 500, 800, or 900 to the communication pogo pin pad 1019b of the electronic device 1001, 101, 200, 300, 400, or 700 may be a first communication (e.g., one-wire communication) signal. For example, when the communication path is configured for second communication (e.g., CC communication or PD communication), the communication path signal transmitted from the communication pogo pin 1029b of the docking device 1002, 500, 800, or 900 to the communication pogo pin pad 1019b of the electronic device 1001, 101, 200, 300, 400, or 700 may be a second communication (e.g., CC communication or PD communication) signal.

According to an embodiment, the second switch 1026 (e.g., a 1:1 switch) of the docking device 1002, 500, 800, or 900 may be electrically connected to the controller 1021 (e.g., an MCU), the PDIC 1023, and the charging port 1028 or 550. For example, the second switch 1026 may prevent signal lines and power lines from being overlapped at the same time (e.g., simultaneously passed on) under the control of the controller 1021 (e.g., an MCU). For example, the second switch 1026 may selectively turn on or off signals flowing through the signal lines and power flowing through the power lines under the control of the controller 1021 (e.g., an MCU). For example, when the communication path of the signal lines is turned on by the second switch 1026, the communication path of the power lines may be turned off. For example, when the communication path of the power lines is turned on by the second switch 1026, the communication path of the signal lines may be turned off.

According to an embodiment, the third switch 1027 (e.g., a load switch) of the docking device 1002, 500, 800, or 900 may be electrically connected to the controller 1021 (e.g., an MCU), the charging port 1028 or 550, and the pogo pin unit 1029, 510, or 810. For example, the third switch 1027 may turn on or off the input of power (e.g., VBUS power) from the charging port 1028 or 550 under the control of the controller 1021 (e.g., an MCU). By turning on or off the third switch 1027, overcurrent input may be blocked to protect internal circuits. For example, during switching of the charging mode (or switching to a keyboard use mode), the third switch 1027 may turn on or off the inflow of power (e.g., VBUS power) into the interior. By turning on or off the inflow of power (e.g., VBUS power) into the interior through the third switch 1027, this may be used as a recognition signal for mode switching (e.g., switching from the charging mode to the keyboard use mode or from the keyboard use mode to the charging mode).

According to an embodiment, the electronic device 1001, 101, 200, 300, 400, or 700 may include a second communication line CC (e.g., a PD communication line or a CC communication line). The docking device 1002, 500, 800, or 900 may include a second communication line CC (e.g., a PD communication line or a CC communication line).

For example, PD communication (e.g., CC communication) may be performed between the electronic device 1001, 101, 200, 300, 400, or 700 and the docking device 1002, 500, 800, or 900 through the second communication line (e.g., a PD communication line or a CC communication line).

According to an embodiment, a processor 1010 of the electronic device 1001, 101, 200, 300, 400, or 700 may be operatively connected to a controller 1011 (e.g., an MCU), a PDIC 1012, a switching charger 1013, a direct charger 1014, and memory 130. For example, the processor 1010 of the electronic device 1001, 101, 200, 300, 400, or 700 may control operations of the controller 1011 (e.g., an MCU), the PDIC 1012, the switching charger 1013, and the direct charger 1014. For example, the processor 1010 may switch the communication path to first communication (e.g., one-wire communication) to enable communication through the pogo data line (POGO_DATA line), based on an input from the charger or an input from a keyboard (e.g., the keyboard 920 of FIG. 9). For example, the processor 1010 and the controller 1011 (e.g., an MCU) may be integrated as a single component. In this case, the controller 1011 (e.g., an MCU) may be embedded in the processor 1010.

For example, the memory 130 may include instructions for the processor 1010 of the electronic device 1001, 101, 200, 300, 400, or 700 to control operations of the controller 1011 (e.g., an MCU), the PDIC 1012, the switching charger 1013, or the direct charger 1014.

For example, operations of the processor 1010, the controller 1011, and/or the PDIC 1012 may be performed by loading instructions stored in the memory 130.

According to an embodiment, the memory 130 may include main memory and storage (or auxiliary memory). The main memory may be configured as a volatile memory such as a dynamic random access memory (DRAM), a static RAM (SRAM), or a synchronous dynamic RAM (SDRAM). The storage may include at least one of a one-time programmable ROM (OTPROM), a PROM, an EPROM, an EEPROM, a mask ROM, a flash ROM, a flash memory, a hard drive, or a solid state drive (SSD).

According to an embodiment, the memory 130 may be a non-volatile memory and may include a large-capacity storage device. For example, the memory 130 may include at least one of a one-time programmable ROM (OTPROM), a PROM, an EPROM, an EEPROM, a mask ROM, a flash ROM, a flash memory, a hard drive, or a solid state drive (SSD). The memory 130 may store various file data, and the stored file data may be updated according to operations of the processor 1010, the controller 1011, and the PDIC 1012.

According to an embodiment, the controller 1011 (e.g., an MCU) of the electronic device 1001, 101, 200, 300, 400, or 700 may switch the communication path to first communication (e.g., one-wire communication) to enable communication through the pogo data line (POGO_DATA line), based on a control signal and/or a mode switching control signal from the docking device 1002, 500, 800, or 900.

According to an embodiment, the controller 1011 (e.g., an MCU) of the electronic device 1001, 101, 200, 300, 400, or 700 may be electrically connected to the processor 1010, the first switch 1015 (e.g., a 2:1 switch), the second switch 1016 (e.g., a 1:1 switch), and the third switch 1017 (e.g., a 1:1 switch). For example, the second switch 1016 and the third switch 1017 may be integrated into a single switch.

For example, the controller 1011 (e.g., an MCU) of the electronic device 1001, 101, 200, 300, 400, or 700 may generate switch control signals to control the on/off of the first switch 1015, the second switch 1016, and the third switch 1017.

For example, the controller 1011 (e.g., an MCU) may input a switch control signal to the first switch 1025 to control the on/off of the first switch 1025. For example, the controller 1011 (e.g., an MCU) may input a switch control signal to the second switch 1026 to control the on/off of the second switch 1026. For example, the controller 1011 (e.g., an MCU) may input a switch control signal to the third switch 1027 to control the on/off of the third switch 1027.

However, the disclosure is not limited thereto, and the processor 1010 may also generate switch control signals for controlling the on/off of the first switch 1015, the second switch 1016, and the third switch 1017. When the processor 1010 generates the switch control signals for controlling the on/off of the first switch 1015, the second switch 1016, and the third switch 1017, the processor 1010 may input the switch control signals to the first switch 1015, the second switch 1016, and the third switch 1017.

For example, a mode switching control signal (e.g., switching from the charging mode to the keyboard use mode or from the keyboard use mode to the charging mode) of the controller 1021 (e.g., an MCU) of the docking device 1002, 500, 800, or 900 may be provided to the processor 1010 and/or the controller 1011 (e.g., an MCU) of the electronic device 1001, 101, 200, 300, 400, or 700.

The controller 1011 (e.g., an MCU) may receive a mode switching control signal for switching to the charging mode (or switching to the keyboard use mode) from the docking device 1002, 500, 800, or 900. The controller 1011 (e.g., an MCU) may provide the mode switching control signal to the processor 1010. For example, the controller 1011 (e.g., an MCU) may enable the charging mode to be used when a keyboard 920 capable of being connected to a charger is used, based on the mode switching control signal.

For example, the processor 1010 may receive a mode switching control signal for switching to the charging mode (or switching to the keyboard use mode) from the docking device 1002, 500, 800, or 900. For example, the processor 1010 may enable the charging mode to be used when the keyboard 920 capable of being connected to a charger is used, based on the mode switching control signal.

For example, the controller 1011 (e.g., an MCU) may receive a mode switching control signal for switching to the charging mode (or switching to the keyboard use mode) from the docking device 1002, 500, 800, or 900. For example, the controller 1011 (e.g., an MCU) may enable the charging mode to be used when a keyboard 920 capable of being connected to a charger is used, based on the mode switching control signal.

For example, based on the mode switching control signal, the processor 101 may switch the mode from the charging mode to a keyboard use mode in which keyboard use is enabled. The processor 1010 may control the controller 1011 (e.g., an MCU) to control the operation (e.g., on/off) of at least one of the first switch 1015, the second switch 1016, and the third switch 1017.

For example, the controller 1011 (e.g., an MCU) may switch to the keyboard use mode in which keyboard use is enabled in the charging mode, based on a mode switching control signal. The controller 1011 (e.g., an MCU) may control the operation (e.g., on/off) of at least one of the first switch 1015, the second switch 1016, and the third switch 1017 using a mode switching control signal.

The PDIC 1012 of the electronic device 1001, 101, 200, 300, 400, or 700 may be electrically connected to the processor 1010 and the first switch 1015. For example, the PDIC 1012 may include a circuit configured to process operations according to the specifications of a USB type (e.g., USB Type-C).

For example, the PDIC 1012 may determine the type of the charger connected to the docking device 1002, 500, 800, or 900 based on CC communication (e.g., PD communication) data from the first switch 1015. For example, the PDIC 1012 may determine whether the charger connected to the docking device 1002, 500, 800, or 900 is a USB Type-C charger. The PDIC 1012 may receive a communication path signal (e.g., a first communication (one-wire communication) signal, or a second communication (PD communication) signal) from the first switch 1015. The PDIC 1012 may provide the received communication path signal (e.g., the first communication (one-wire communication) signal or the second communication (PD communication) signal) to the processor 1010. The processor 1010 may determine whether the charger connected to the docking device 1002, 500, 800, or 900 is a USB Type-C charger based on the communication path signal (e.g., the first communication (one-wire communication) signal or the second communication (PD communication) signal).

For example, not only the PDIC 1012 but also the controller 1011 (e.g., an MCU) or the processor 1010 may distinguish the type of the charger.

For example, not only the PDIC 1023 but also the MUIC 1024 or the controller 1021 (an MCU) may distinguish the type of the charger.

For example, the PDIC 1012 may determine the type of the charger connected to the charging port 1018 (e.g., a USB Type-C connector) based on CC communication (e.g., PD communication) data input through the charging port 1018 (e.g., a USB Type-C connector). The PDIC 1012 may determine whether the charger connected to the charging port 1018 (e.g., a USB Type-C connector) is a USB Type-C charger. The PDIC 1012 may provide data on the charging type of the charger to the processor 1010.

According to an embodiment, the switching charger 1013 may charge the battery 189 under the control of the processor 1010. For example, the switching charger 1013 may include a charging circuit (e.g., a buck-boost circuit) for a first charging mode (e.g., USB Type-C charging, general charging, adaptive fast charge (AFC), or quick charge (QC)).

According to an embodiment, the direct charger 1014 may charge the battery 189 under the control of the processor 1010. For example, the direct charger 1014 may include a charging circuit (e.g., a capacitor charging circuit) for a second charging mode (e.g., a USB Type-C charging or high-speed charging such as USB PD (power delivery) charging). However, the disclosure is not limited thereto, and charging based on a first charging mode (e.g., general charging, adaptive fast charge (AFC), and/or quick charge (QC) charging) may also be performed using the direct charger 1014.

According to an embodiment, the first switch 1015 (e.g., a 2:1 switch) of the electronic device 1001, 101, 200, 300, 400, or 700 may be electrically connected to the controller 1011 (e.g., an MCU), the PDIC 1012, and the pogo pin pad unit 1019.

For example, the first switch 1015 may divide (e.g., branch) the communication path so that the pogo data line signal may enable first communication (e.g., one-wire communication) or second communication (e.g., PD communication) under the control of the controller 1011 (e.g., an MCU).

According to an embodiment, the first switch 1016 (e.g., a 1:2 switch) of the electronic device 1001, 101, 200, 300, 400, or 700 may be electrically connected to the controller 1011 (e.g., an MCU), the PDIC 1012, and the charging port 1018. According to an embodiment, the second switch 1016 may also be electrically connected to the processor 1010, without being limited thereto.

According to an embodiment, the third switch 1017 (e.g., a 1:1 switch) of the electronic device 1001, 101, 200, 300, 400, or 700 may be electrically connected to the controller 1011 (e.g., an MCU), the PDIC 1012, and the charging port 1018. According to an embodiment, the third switch 1017 may also be electrically connected to the processor 1010, without being limited thereto.

For example, the operation (e.g., on/off) of the second switch 1016 and the third switch 1017 may be controlled under the control of the processor 1010 or the controller 1011 (e.g., an MCU). The second switch 1016 and the third switch 1017 may prevent signal lines and power lines from overlapping at the same time (e.g., being turned on simultaneously in the pass state) under the control of the processor 1010 or the controller 1011 (e.g., an MCU). For example, the second switch 1016 may turn on or off power flowing through power lines under the control of the processor 1010 or the controller 1011 (e.g., an MCU). For example, the second switch 1016 may turn on or off signals flowing through signal lines under the control of the processor 1010 or the controller 1011 (e.g., an MCU).

According to an embodiment of the disclosure, when a charger is connected to the charging port 1028 of the docking device 1002, 500, 800, or 900, charging of the electronic device 1001, 101, 200, 300, 400, or 700 may be performed depending on the charging mode of the charger. For example, charging of the electronic device 1001, 101, 200, 300, 400, or 700 may be performed according to the first charging mode or the second charging mode. The first charging mode may include general charging, adaptive fast charge (AFC), or quick charge (QC) charging. For example, the second charging mode may include a power delivery (PD) charging mode.

According to an embodiment, when the charger connected to the charging port 1028 of the docking device 1002, 500, 800, or 900 supports general charging among the first charging mode (e.g., general charging, adaptive fast charge (AFC), or quick charge (QC) charging), the communication path and the charging path between the docking device 1002, 500, 800, or 900 and the electronic device 1001, 101, 200, 300, 400, or 700 may be controlled to perform general charging.

According to an embodiment, when the charger connected to the charging port 1028 of the docking device 1002, 500, 800, or 900 supports AFC charging among the first charging mode (e.g., general charging, adaptive fast charge (AFC), or quick charge (QC) charging), the communication path and the charging path between the docking device 1002, 500, 800, or 900 and the electronic device 1001, 101, 200, 300, 400, or 700 may be controlled to perform AFC charging.

For example, when the charger connected to the charging port 1028 of the docking device 1002, 500, 800, or 900 supports the first charging mode (e.g., general charging, adaptive fast charge (AFC), or quick charge (QC) charging), the first communication line (e.g., a one-wire communication line) may be maintained. The charging path may be controlled according to the first charging mode (e.g., general charging, adaptive fast charge (AFC) charging, or quick charge (QC) charging).

According to an embodiment, when the charger connected to the charging port 1028 of the docking device 1002, 500, 800, or 900 supports the second charging mode (e.g., power delivery (PD) charging), the communication path and the charging path between the docking device 1002, 500, 800, or 900 and the electronic device 1001, 101, 200, 300, 400, or 700 may be controlled according to the second charging mode (e.g., PD charging). This may allow charging to be performed according to the second charging mode (e.g., PD charging).

For example, when the charger connected to the charging port 1028 of the docking device 1002, 500, 800, or 900 supports the second charging mode (e.g., PD charging), the first communication line (e.g., one-wire communication line) may be switched to the second communication line (e.g., PD communication or CC communication line) capable of high-speed charging or PD charging through the controller 1021 (e.g., an MCU) and the controller 1011 (e.g., an MCU). In this case, the existing first communication line (e.g., one-wire communication line) may be blocked through the controller 1021 (e.g., an MCU) and the controller 1011 (e.g., an MCU).

According to an embodiment, when a keyboard docking device (e.g., the keyboard docking device 900) is used, a one-wire communication line may be continuously used for transmitting key input. In this case, when a charger is connected to the charging port of the keyboard docking device 900, the connection of the charger may be notified to the electronic device 1001, 101, 200, 300, 400, or 700.

According to an embodiment, when a charger is connected to the charging port of the docking device 1002, 500, or 800, or the keyboard docking device 900, the electronic device 1001, 101, 200, 300, 400, or 700 may display a popup on its display indicating the available charging modes. The user may identify the available charging modes through the popup displayed on the display of the electronic device 1001, 101, 200, 300, 400, or 700 and may select a preferred charging mode from among a plurality of charging modes. Once the charging mode is selected, the keyboard docking device 900 or 1003 and the electronic device 1001, 101, 200, 300, 400, or 700 may perform charging based on the selected charging mode. For example, when a popup message (e.g., "Please select your preferred charging mode between general charging and high-speed charging (e.g., PD charging)") is displayed on the display of the electronic device 1001, 101, 200, 300, 400, or 700, the user may select one of general charging (e.g., the first charging mode) and high-speed charging (e.g., the second charging mode). When the user selects the high-speed charging (e.g., the second charging mode), the electronic device 1001, 101, 200, 300, 400, or 700 may switch to the PD charging (or high-speed charging). The electronic device 1001, 101, 200, 300, 400, or 700 may notify the docking device 1002, 500, 800, or 900 that it is switched to the PD charging (or high-speed charging).

Hereinafter, operations of the docking device 1002, 500, 800, or 900 and the electronic device 1001, 101, 200, 300, 400, or 700 will be described in a case where a charger supporting the second charging mode (e.g., PD charging) is connected to the charging port 1028 of the docking device 1002, 500, 800, or 900.

According to an embodiment, when a charger supporting the second charging mode (e.g., PD charging) is connected to the charging port 1028 of the docking device 1002, 500, 800, or 900, the PDIC 1023 may recognize that the charger supports the second charging mode (e.g., PD charging).

For example, the PDIC 1023 may provide charger type data (e.g., data indicating whether the charger supports the second charging mode, such as PD charging) to the controller 1021 (e.g., an MCU) via I2C communication.

For example, the controller 1021 (e.g., an MCU) may switch the data path to the first communication (e.g., one-wire communication) path based on the charger type data received from the PDIC 1023. The controller 1021 (e.g., an MCU) may provide data (e.g., communication path control data or communication path switching data) indicating the change of the communication path to the first communication (e.g., one-wire communication) path to the electronic device 1001, 101, 200, 300, 400, or 700.

According to an embodiment, the electronic device 1001, 101, 200, 300, 400, or 700 may receive, from the docking device 1002, 500, 800, or 900, data (e.g., communication path control data or communication path switching data) indicating that the communication path is switched to the first communication (e.g., one-wire communication) path.

For example, the processor 1010 or the controller 1011 of the electronic device 1001, 101, 200, 300, 400, or 700 may control the operation of the first switch 1015 based on the switching of the communication path to the first communication (e.g., one-wire communication) path.

For example, the first switch 1015 may switch the communication path from the first communication (e.g., one-wire communication) path to the second communication (e.g., PD communication or CC communication) path that supports charging using the second charging mode (e.g., PD charging), under the control of the processor 1010 or the controller 1011.

For example, the processor 1010 or the controller 1011 may provide the docking device 1002, 500, 800, or 900 with data indicating that the communication path of the electronic device 1001, 101, 200, 300, 400, or 700 is switched to the second communication path (e.g., PD communication or CC communication path) that supports the second charging mode (e.g., PD charging) (e.g., switching of the path to a CC communication line).

The controller 1021 (e.g., an MCU) of the docking device 1002, 500, 800, or 900 may acquire information indicating that the communication path of the electronic device 1001, 101, 200, 300, 400, or 700 is switched to the second communication (e.g., PD communication or CC communication) path (e.g., switching of the path to a CC communication line). Based on the switching of the communication path of the electronic device 1001, 101, 200, 300, 400, or 700 to the second communication path (e.g., PD communication or CC communication path), the controller 1021 (e.g., an MCU) of the docking device 1002, 500, 800, or 900 may switch the communication path of the docking device to the second communication path (e.g., PD communication or CC communication path (e.g., switching of the path to a CC communication line).

For example, in the electronic device 1001, 101, 200, 300, 400, or 700, the first switch 1015 may be controlled to switch the communication path to the second communication (e.g., PD communication or CC communication) path (e.g., switching of the path to a CC communication line).

For example, the first switch 1025 of the docking device 1002, 500, 800, 300, 400, or 900 may be controlled to switch the communication path to the second communication (e.g., PD communication or CC communication) path (e.g., switching of the path to a CC communication line).

According to an embodiment, when the communication path of the electronic device 1001, 101, 200, 300, 400, or 700 and the docking device 1002, 500, 800, or 900 is switched to the second communication (e.g., PD communication or CC communication), malfunction may be prevented.

For example, when the communication path is switched to the second communication (e.g., PD communication or CC communication) path that supports high-speed charging (e.g., PD charging), it may be possible to prevent malfunctions in cases where another device is connected to the charging port 1018 of the electronic device 1001, 101, 200, 300, 400, or 700. To this end, the processor 1010 or the controller 1011 (e.g., an MCU) may input a switch control signal to the second switch 1016 and the third switch 1017 so as to turn off the second switch 1016 and the third switch 1017. When the second switch 1016 and the third switch 1017 are turned off, connection to the power (e.g., VBUS power) and CC communication lines may be blocked.

For example, when the communication path is switched to the second communication (e.g., PD communication or CC communication) path that supports charging using the second charging mode (e.g., PD charging), the controller 1021 (e.g., an MCU) of the docking device 1002, 500, 800, or 900 may input a switch control signal to the second switch 1026 to turn off the second switch 1026. When the second switch 1026 is turned off, the connection to the CC communication line may be blocked.

According to an embodiment, the PDIC 1012 of the electronic device 1001, 101, 200, 300, 400, or 700 and the PDIC 1023 of the docking device 1002, 500, 800, or 900 may be connected via the pogo pin pad unit 1019 of the electronic device and the pogo pin unit 1029 of the docking device through the second communication (e.g., PD communication or CC communication) path, so that high-speed charging communication (e.g., PD charging communication) may be performed between the electronic device and the docking device. When high-speed charging communication (e.g., PD charging communication) is performed between the electronic device 1001, 101, 200, 300, 400, or 700 and the docking device 1002, 500, 800, or 900, the processor 1010 may operate the direct charger 1014 to perform high-speed charging (e.g., charging the battery 189 by high-speed charging (PD charging)).

Hereinafter, operations of the docking device 1002, 500, 800, or 900 and the electronic device 1001, 101, 200, 300, 400, or 700 will be described in a case where a charger supporting a general charging, AFC charging, or QC charging is connected to the charging port 1028 of the docking device.

According to an embodiment, when a charger that supports the first charging mode (e.g., general charging, AFC charging, or QC charging) is connected to the charging port 1028 of the docking device 1002, 500, 800, or 900, the MUIC 1024 may recognize the charger that supports the first charging mode (e.g., general charging, AFC charging, or QC charging) through a communication line (e.g., D+/D- line) that supports the first charging mode.

For example, the MUIC 1024 may provide the controller 1021 (e.g., an MCU) with data regarding the charger that supports the first charging mode (e.g., general charging, AFC charging, or QC charging).

For example, the controller 1021 (e.g., an MCU) may control the first switch 1025 to switch the communication path to the first communication (e.g., one-wire communication) path.

For example, the controller 1021 (e.g., an MCU) may provide the electronic device 1001, 101, 200, 300, 400, or 700 with data (e.g., communication path control data or communication path switching data) indicating that the communication path is switched to the first communication (e.g., one-wire communication) path.

For example, the electronic device 1001, 101, 200, 300, 400, or 700 may acquire (e.g., receive) data (e.g., communication path control data or communication path switching data) indicating that the communication path of the docking device 1002, 500, 800, or 900 is switched to the first communication (e.g., one-wire communication) path.

For example, the docking device 1002, 500, 800, or 900 may turn on the third switch 1027 to transmit the input power (e.g., VBUS power) to the electronic device 1001, 101, 200, 300, 400, or 700.

For example, the electronic device 1001, 101, 200, 300, 400, or 700 may identify that a charger using the first charging mode (e.g., general charging, AFC charging, or QC charging) is connected to the docking device 1002, 500, 800, or 900, and may operate the switching charger 1013 so that general charging, AFC charging, or QC charging based on the first charging mode is performed.

Hereinafter, the operation of the keyboard docking device 900 (e.g., the keyboard docking device 1003 illustrated in FIG. 14), which includes a keyboard 920, and the electronic device 1001, 101, 200, 300, 400, or 700 will be described. When the electronic device 1001, 101, 200, 300, 400, or 700 is connected to the keyboard docking device 900 or 1003, a method for switching between a charging mode and a keyboard use mode will be described.

According to an embodiment, when the electronic device 1001, 101, 200, 300, 400, or 700 is connected to the keyboard docking device 900 or 1003 and no charger is connected to the keyboard docking device 900 or 1003, the keyboard use mode may be maintained. In this case, the electronic device 1001, 101, 200, 300, 400, or 700 and/or the keyboard docking device 900 or 1003 may disable the use of a mode switch key.

According to an embodiment, when the electronic device 1001, 101, 200, 300, 400, or 700 is connected to the keyboard docking device 900 or 1003, and a charger is connected to the keyboard docking device 900 or 1003, switching from the keyboard use mode to the charging mode may be performed. Switching from the charging mode to the keyboard use mode may also be performed.

For example, when a charger is connected to the charging port (e.g., the charging port 1028 of FIG. 10) of the keyboard docking device 900 or 1003, the electronic device 1001, 101, 200, 300, 400, or 700 may display a popup on the display indicating available charging modes. A user may identify the available charging modes (e.g., the first charging mode or the second charging mode) through the popup displayed on the display of the electronic device 1001, 101, 200, 300, 400, or 700, and may select a preferred charging mode from among the plurality of charging modes. When a charging mode (e.g., the first charging mode or the second charging mode) is selected based on the user selection, the keyboard docking device 900 or 1003 and the electronic device 1001, 101, 200, 300, 400, or 700 may perform charging based on the selected charging mode. For example, a message that allows selection of the charging mode may be displayed in the popup. A popup message (e.g., "Please select your preferred charging mode between general charging and high-speed charging (e.g., PD charging)") may be displayed on the display of the electronic device 1001, 101, 200, 300, 400, or 700. The user may select either general charging (e.g., the first charging mode) or high-speed charging (e.g., the second charging mode). When the user selects general charging (e.g., the first charging mode), the electronic device 1001, 101, 200, 300, 400, or 700 and the keyboard docking device 900 or 1003 may perform general charging. When the user selects high-speed charging (e.g., the second charging mode or PD charging), the electronic device 1001, 101, 200, 300, 400, or 700 and the keyboard docking device 900 or 1003 may perform high-speed charging (e.g., PD charging).

According to an embodiment, high-speed charging and use of the keyboard 920 may be performed together.

For example, when there is no key input (e.g., the key input 1022 of FIG. 10) from the keyboard 920 for a predetermined period of time, the mode may be switched from the keyboard use mode to the charging mode.

For example, when one or more key inputs (e.g., the key input 1022 of FIG. 10) from the keyboard 920 are detected during the charging mode, switching from the charging mode to the keyboard use mode may be performed.

For example, during the charging mode, a popup indicating that the charging mode is active may be displayed on the display of the electronic device 1001, 101, 200, 300, 400, or 700. In addition, a popup indicating that the mode may switch from the charging mode to the keyboard use mode through a key input may be displayed on the display of the electronic device 1001, 101, 200, 300, 400, or 700. A message such as "Press any key to use the keyboard again" may be displayed through the popup.

According to an embodiment, at least one of the function keys included in the keyboard 920 may be configured to serve as a keyboard use mode switching key. When the predetermined keyboard use mode switching key is input, the mode may switch from the charging mode to the keyboard use mode.

For example, when switching from the charging mode to the keyboard use mode, the controller 1021 (e.g., an MCU) may generate a mode switching control signal. The controller 1021 (e.g., an MCU) may turn on/off the load switch 1027 connected to power (e.g., VBUS power) one or more times through the mode switching control signal. The processor 1010 of the electronic device 1001, 101, 200, 300, 400, or 700 may detect that the load switch 1027 is turned on/off one or more times, and may recognize the switching from the charging mode to the keyboard use mode.

For example, when a charger supporting high-speed charging (e.g., PD charging) based on the second charging mode is connected to the keyboard docking device 900 or 1003, the processor 1010 of the electronic device 1001, 101, 200, 300, 400, or 700 may control the controller 1011 to control the operation of the first switch 1015. By controlling the operation of the first switch 1015, the communication path may be switched from the second communication (e.g., CC communication or PD communication) path to the first communication (e.g., one-wire communication) path.

For example, when a charger supporting the second charging mode (e.g., PD charging) is connected to the keyboard docking device 900 or 1003, the controller 1021 (e.g., an MCU) of the keyboard docking device 900 or 1003 may control the operation of the first switch 1025. By controlling the operation of the first switch 1025, the communication path may be switched from the second communication (e.g., CC communication or PD communication) path to the first communication (e.g., one-wire communication) path.

For example, when a charger supporting the first charging mode (e.g., general charging, AFC charging, or QC charging) is connected to the keyboard docking device 900 or 1003, since the use of the keyboard 920 and charging are capable of being performed simultaneously, the operations of displaying a popup message and switching modes may not be performed.

According to an embodiment, at least one of the function keys included in the keyboard 920 may be configured to serve as a charging mode switching key. For example, when the predetermined charging mode switching key is input, the mode may switch from the keyboard use mode to the charging mode.

According to an embodiment, at least one of the function keys included in the keyboard 920 may be configured to serve as a keyboard use mode switching key. For example, when the predetermined keyboard use mode switching key is input, the mode may switch from the charging mode to the keyboard use mode.

For example, during the charging mode, the operations of the electronic device 1001, 101, 200, 300, 400, or 700 and the docking device 1002, 500, or 800 (or the keyboard docking device 900 or 1003) for performing charging according to the first charging mode may refer to the descriptions provided above.

For example, during the charging mode, the operations of the electronic device 1001, 101, 200, 300, 400, or 700 and the docking device 1002, 500, or 800 (or the keyboard docking device 900 or 1003) for performing high-speed charging based on the second charging mode may refer to the descriptions provided above.

The respective operations of the electronic device 1001, 101, 200, 300, 400, or 700 and the docking device 1002, 500, 800, or 900 (or the keyboard docking device 900 or 1003), with reference to FIG. 10, may be performed sequentially, but are not necessarily performed in that order. For example, the order of individual operations may be changed, and at least two operations may be performed in parallel.

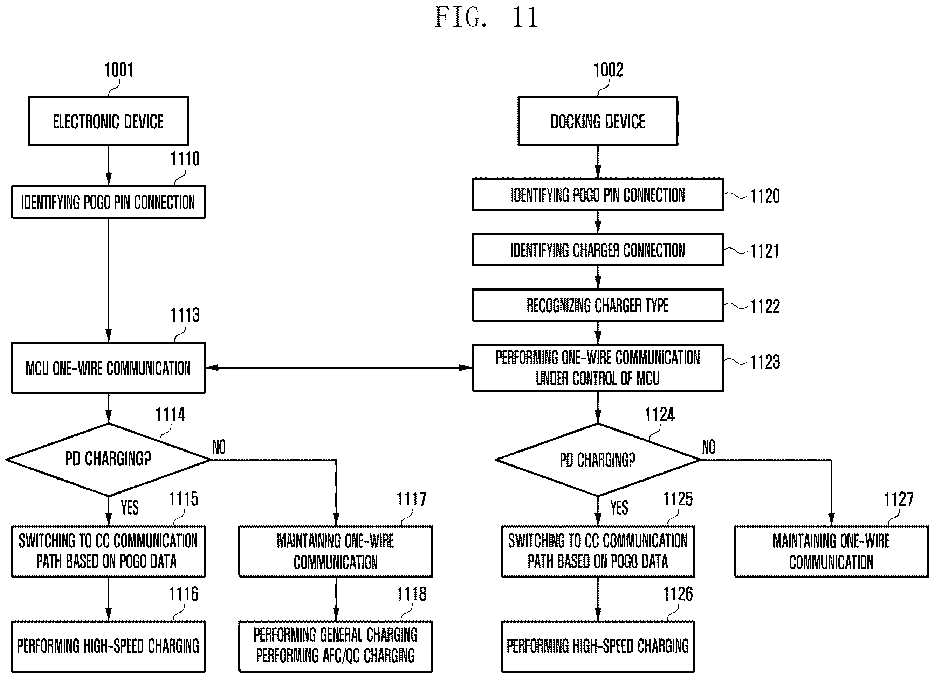

FIG. 11 is a view illustrating a method of operating an electronic device and a docking device according to an embodiment of the disclosure.

Referring to FIGS. 10 and 11, an electronic device 1001 (e.g., the electronic device 101 of FIG. 1, the electronic device 200 of FIGS. 2A to 2D, the electronic device 300 of FIGS. 3A and 3B, the electronic device 400 of FIG. 4, the electronic device 700 of FIG. 7, or the electronic device 400 of FIG. 9) may be mounted (e.g., placed) on a docking device 1002 (e.g., the docking device 500 of FIGS. 4 and 5, the keyboard docking device 800 of FIG. 7, or the keyboard docking device 900 of FIG. 9).

When the electronic device 1001, 101, 200, 300, 400, or 700 is mounted (e.g., placed) on the docking device 1002, 500, 800, or 900, the pogo pin pad unit 1019 of the electronic device 1001, 101, 200, 300, 400, or 700 may be electrically connected to the pogo pin unit 1029 of the docking device 500, 800, 900, or 1002.

In operation 1110, the electronic device 1001, 101, 200, 300, 400, or 700 may identify the pogo pin connection.

In operation 1120, the docking device 1002, 500, 800, or 900 may identify the pogo pin connection.

For example, the electronic device 1001, 101, 200, 300, 400, or 700 and the docking device 1002, 500, 800, or 900 may perform communication and charging operations through the pogo pin connection.

In operations 1110 and 1120, before a charger is mounted to the docking device 1002, 500, 800, or 900, data transmission and reception may be performed between the electronic device 1001, 101, 200, 300, 400, or 700 and the docking device 1002, 500, 800, or 900 using the first communication (e.g., one-wire communication).

In operation 1121, the docking device 1002, 500, 800, or 900 may identify whether a charger is connected to a charging port (e.g., the charging port 1028 of FIG. 10).

In operation 1122, when a charger is connected to the charging port (e.g., the charging port 1028 of FIG. 10) of the docking device 1002, 500, 800, or 900, the docking device 1002, 500, 800, or 900 may recognize the type of the charger (e.g., a charger supporting the first charging mode or a charger supporting the second charging mode).

For example, the docking device 1002, 500, 800, or 900 may recognize whether the charger supports the first charging mode (e.g., general charging, AFC charging, or QC charging) or the second charging mode (e.g., high-speed charging or PD charging).

In operation 1123, the docking device 1002, 500, 800, or 900 may provide data regarding switching of the communication path to the electronic device 1001, 101, 200, 300, 400, or 700 using the first communication (e.g., one-wire communication) path.

In operation 1113, the electronic device 1001, 101, 200, 300, 400, or 700 may acquire data regarding switching of the communication path from the docking device 1002, 500, 800, or 900. The electronic device 1001, 101, 200, 300, 400, or 700 may control the first switch 1015 to switch the communication path based on the data regarding the switching of the communication path received through the first communication (e.g., one-wire communication) path.

In operation 1124, the docking device 1002, 500, 800, or 900 may determine whether the connected charger supports the second charging mode (e.g., high-speed charging or PD charging).

If it is determined in operation 1124 that the charger supports the second charging mode (e.g., high-speed charging or PD charging), operation 1125 may be performed.

In operation 1125, the docking device 1002, 500, 800, or 900 may switch the communication path to the second communication (e.g., CC communication or PD communication) path.

In operation 1126, the docking device 1002, 500, 800, or 900 may perform charging based on the second charging mode (e.g., high-speed charging or PD charging).

If it is determined in operation 1124 that the charger does not support the second charging mode (e.g., high-speed charging or PD charging) (No), operation 1127 may be performed.

In operation 1127, the docking device 1002, 500, 800, or 900 may maintain the first communication (e.g., one-wire communication) path. The docking device 1002, 500, 800, or 900 may perform general charging based on the first charging mode in a state where the communication path is the first communication (e.g., one-wire communication) path. For example, the docking device 1002, 500, 800, or 900 may perform AFC charging or QC charging of the general charging mode in a state where the communication path is the first communication (e.g., one-wire communication) path.

In operation 1114, the electronic device 1001, 101, 200, 300, 400, or 700 may determine whether the charger supports the second charging mode (e.g., high-speed charging or PD charging) based on data regarding the charging mode received from the docking device 1002, 500, 800, or 900.

If it is determined in operation 1114 that the charger supports the second charging mode (e.g., high-speed charging or PD charging), operation 1115 may be performed.

In operation 1115, the electronic device 1001, 101, 200, 300, 400, or 700 may switch the communication path to the second communication (e.g., CC communication or PD communication) path.

In operation 1116, the electronic device 1001, 101, 200, 300, 400, or 700 may perform high-speed charging (e.g., PD charging) based on the second charging mode.

If it is determined in operation 1114 that the charger does not support high-speed charging (e.g., PD charging) based on the second charging mode (No), operation 1117 may be performed.

In operation 1117, the electronic device 1001, 101, 200, 300, 400, or 700 may maintain the first communication (e.g., one-wire communication) path. For example, if the current communication path is the second communication (e.g., CC communication or PD communication) path, the electronic device may switch the communication path to the second communication (e.g., one-wire communication) path.

In operation 1118, the electronic device 1001, 101, 200, 300, 400, or 700 may perform general charging in a state where the communication path is the second communication (e.g., one-wire communication) path. For example, the electronic device 1001, 101, 200, 300, 400, or 700 may perform AFC charging or QC charging based on the first charging mode in a state where the communication path is the second communication (e.g., one-wire communication) path.

The respective operations described with reference to FIG. 11 may be performed sequentially, but are not necessarily performed in that order. For example, the order of individual operations may be changed, and at least two operations may be performed in parallel.

According to an embodiment, operations 1110, 1113, 1114, 1115, 1116, and 1117 may be understood to be performed under the control of a processor (e.g., the processor 120 of FIG. 1 or the processor 1010 of FIG. 10) of the electronic device 1001, 101, 200, 300, 400, or 700.

For example, operations of the processor 120 or 1010, the controller 1011, the PDIC 1012, the switching charger 1013, the direct charger 1014, the first switch 1015, the second switch 1016, and the third switch 1017 may be performed sequentially.

For example, operations of the processor 120 or 1010, the controller 1011, the PDIC 1012, the switching charger 1013, the direct charger 1014, the first switch 1015, the second switch 1016, and the third switch 1017 may be performed in parallel.

For example, the operations of the processor 120 or 1010, the controller 1011, the PDIC 1012, the switching charger 1013, the direct charger 1014, the first switch 1015, the second switch 1016, and the third switch 1017 may be performed by loading instructions stored in the memory 130.

For example, the memory 130 may store instructions for performing operations of the processor 120 or 1010, the controller 1011, the PDIC 1012, the switching charger 1013, the direct charger 1014, the first switch 1015, the second switch 1016, and the third switch 1017.

According to an embodiment, operations 1120, 1121, 1122, 1123, 1124, 1125, 1126, and 1127 may be understood to be performed under the control of a controller 1021 (e.g., the MCU of FIG. 10) of the docking device 1002, 500, 800, or 900.

For example, operations of the controller 1021 (e.g., an MCU), the PDIC 1023, the MUIC 1024, the first switch 1025, the second switch 1026, and the third switch 1027 may be performed sequentially.

For example, operations of the controller 1021 (e.g., an MCU), the PDIC 1023, the MUIC 1024, the first switch 1025, the second switch 1026, and the third switch 1027 may be performed in parallel.

For example, operations of the controller 1021 (e.g., an MCU), the PDIC 1023, the MUIC 1024, the first switch 1025, the second switch 1026, and the third switch 1027 may be performed by loading instructions stored in the memory 1030.

For example, the memory 1030 may store instructions for performing operations of the controller 1021 (e.g., an MCU), the PDIC 1023, the MUIC 1024, the first switch 1025, the second switch 1026, and the third switch 1027.

At least some operations illustrated in FIG. 11 may be preceded or followed by at least some operations described with reference to other drawings in this document, which may additionally and/or alternatively be included.

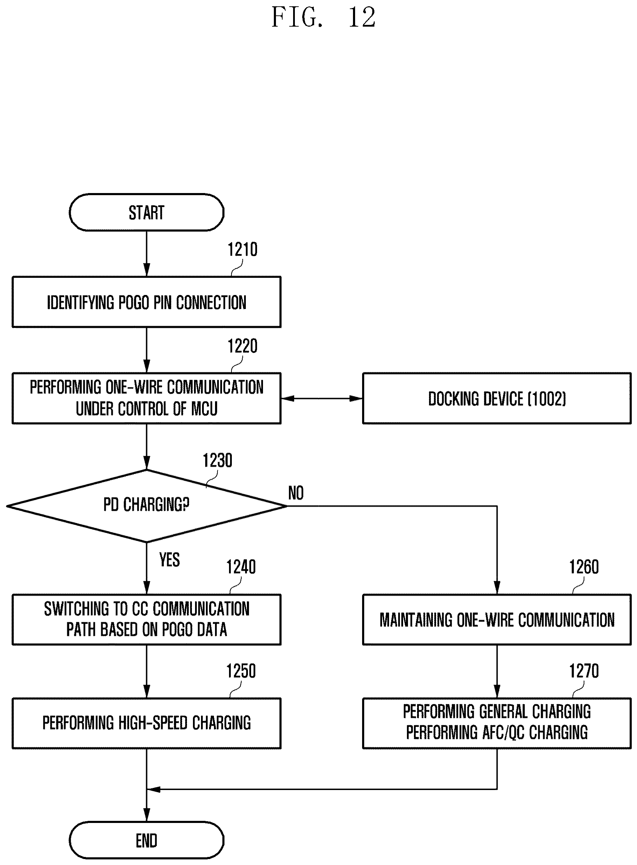

FIG. 12 illustrates a method of operating an electronic device according to an embodiment of the disclosure.

Referring to FIGS. 10 and 12, an electronic device 1001 (e.g., the electronic device 101 of FIG. 1, the electronic device 200 of FIGS. 2A to 2D, the electronic device 300 of FIGS. 3A and 3B, the electronic device 400 of FIG. 4, the electronic device 700 of FIG. 7, or the electronic device 400 of FIG. 9) may be mounted (e.g., placed) on a docking device 1002 (e.g., the docking device 500 of FIGS. 4 and 5, the keyboard docking device 800 of FIG. 7, or the keyboard docking device 900 of FIG. 9).

When the electronic device 1001, 101, 200, 300, 400, or 700 is mounted (e.g., placed) on the docking device 1002, 500, 800, or 900, the pogo pin pad unit 1019 of the electronic device 1001, 101, 200, 300, 400, or 700 may be electrically connected to the pogo pin unit 1029 of the docking device 500, 800, 900, or 1002.

In operation 1210, the electronic device 1001, 101, 200, 300, 400, or 700 may identify the pogo pin connection.

For example, the electronic device 1001, 101, 200, 300, 400, or 700 and the docking device 1002, 500, 800, or 900 may perform communication and charging operations through the pogo pin connection.

In operation 1220, the electronic device 1001, 101, 200, 300, 400, or 700 may acquire data regarding switching of the communication path from the docking device 1002, 500, 800, or 900. The electronic device 1001, 101, 200, 300, 400, or 700 may control the first switch 1015 to switch the communication path based on the data regarding the switching of the communication path received through the first communication (e.g., one-wire communication) path.

In operation 1230, the electronic device 1001, 101, 200, 300, 400, or 700 may determine whether the charger supports the first charging mode (e.g., general charging, AFC charging, or QC charging) or the second charging mode (e.g., high-speed charging or PD charging), based on data regarding the charging mode received from the docking device 1002, 500, 800, or 900.

If it is determined in operation 1230 that the charger supports high-speed charging (e.g., PD charging) based on the second charging mode (Yes), operation 1240 may be performed.

In operation 1240, the electronic device 1001, 101, 200, 300, 400, or 700 may control the first switch 1015 to switch the communication path based on data regarding switching of the communication path. The electronic device 1001, 101, 200, 300, 400, or 700 may operate the first switch 1015 to switch the communication path to the second communication (e.g., CC communication or PD communication) path.

In operation 1250, the electronic device 1001, 101, 200, 300, 400, or 700 may perform high-speed charging (e.g., PD charging) based on the second charging mode.

If it is determined in operation 1230 that the charger does not support high-speed charging (e.g., PD charging) based on the second charging mode (No), operation 1260 may be performed.

In operation 1260, the electronic device 1001, 101, 200, 300, 400, or 700 may maintain the first communication (e.g., one-wire communication) path. For example, if the current communication path is the second communication (e.g., CC communication or PD communication) path, the electronic device may switch the communication path to the first communication (e.g., one-wire communication) path.

In operation 1270, the electronic device 1001, 101, 200, 300, 400, or 700 may perform general charging based on the first charging mode in a state where the communication path is the first communication (e.g., one-wire communication) path. For example, the electronic device 1001, 101, 200, 300, 400, or 700 may perform AFC charging or QC charging based on the first charging mode in a state where the communication path is the first communication (e.g., one-wire communication) path.

The respective operations described with reference to FIG. 12 may be performed sequentially, but are not necessarily performed in that order. For example, the order of individual operations may be changed, and at least two operations may be performed in parallel.

According to an embodiment, operations 1210, 1220, 1230, 1240, 1250, 1260, and 1270 may be understood to be performed under the control of a processor (e.g., the processor 120 of FIG. 1 or the processor 1010 of FIG. 10) of the electronic device 1001, 101, 200, 300, 400, or 700.

For example, operations of the processor 120 or 1010, the controller 1011, the PDIC 1012, the switching charger 1013, the direct charger 1014, the first switch 1015, the second switch 1016, and the third switch 1017 may be performed sequentially.

For example, operations of the processor 120 or 1010, the controller 1011, the PDIC 1012, the switching charger 1013, the direct charger 1014, the first switch 1015, the second switch 1016, and the third switch 1017 may be performed in parallel.

For example, the operations of the processor 120 or 1010, the controller 1011, the PDIC 1012, the switching charger 1013, the direct charger 1014, the first switch 1015, the second switch 1016, and the third switch 1017 may be performed by loading instructions stored in the memory 130.

For example, the memory 130 may store instructions for performing operations of the processor 120 or 1010, the controller 1011, the PDIC 1012, the switching charger 1013, the direct charger 1014, the first switch 1015, the second switch 1016, and the third switch 1017.

At least some operations illustrated in FIG. 12 may be preceded or followed by at least some operations described with reference to other drawings in this document, which may additionally and/or alternatively be included.

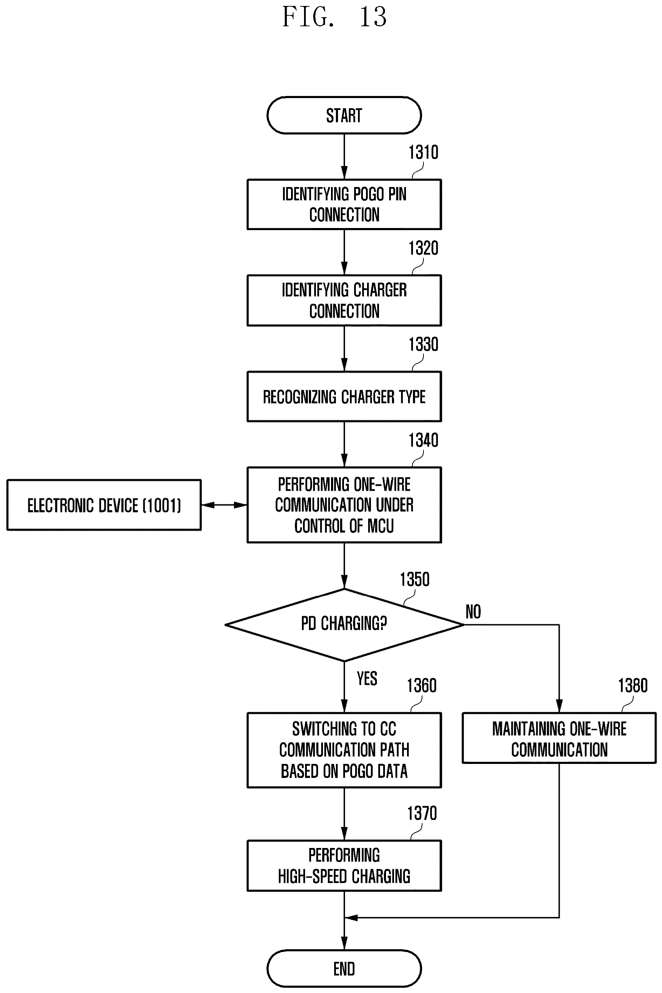

FIG. 13 illustrates a method of operating a docking device according to an embodiment of the disclosure.

Referring to FIGS. 10 and 13, an electronic device 1001 (e.g., the electronic device 101 of FIG. 1, the electronic device 200 of FIGS. 2A to 2D, the electronic device 300 of FIGS. 3A and 3B, the electronic device 400 of FIG. 4, the electronic device 700 of FIG. 7, or the electronic device 400 of FIG. 9) may be mounted (e.g., placed) on a docking device 1002 (e.g., the docking device 500 of FIGS. 4 and 5, the keyboard docking device 800 of FIG. 7, or the keyboard docking device 900 of FIG. 9).

When the electronic device 1001, 101, 200, 300, 400, or 700 is mounted (e.g., placed) on the docking device 1002, 500, 800, or 900, the pogo pin pad unit 1019 of the electronic device 1001, 101, 200, 300, 400, or 700 may be electrically connected to the pogo pin unit 1029 of the docking device 500, 800, 900, or 1002.

In operation 1310, the docking device 1002, 500, 800, or 900 may identify the pogo pin connection.

For example, the electronic device 1001, 101, 200, 300, 400, or 700 and the docking device 1002, 500, 800, or 900 may perform communication and charging operations through the pogo pin connection.

In operation 1320, the docking device 1002, 500, 800, or 900 may identify whether a charger is connected to a charging port (e.g., the charging port 1028 of FIG. 10).

In operation 1330, when a charger is connected to the charging port (e.g., the charging port 1028 of FIG. 10) of the docking device 1002, 500, 800, or 900, the docking device 1002, 500, 800, or 900 may recognize the type of the charger (e.g., a charger supporting the first charging mode or a charger supporting the second charging mode).

For example, the docking device 1002, 500, 800, or 900 may recognize whether the charger supports charging based on the first charging mode (e.g., general charging, AFC charging, or QC charging) or supports high-speed charging (e.g., PD charging) based on the second charging mode.

In operation 1340, the docking device 1002, 500, 800, or 900 may provide data regarding switching of the communication path to the electronic device 1001, 101, 200, 300, 400, or 700 using the first communication (e.g., one-wire communication) path. For example, the electronic device 1001, 101, 200, 300, 400, or 700 may control the first switch 1015 to switch the communication path based on data regarding switching of the communication path.

In operation 1350, the docking device 1002, 500, 800, or 900 may determine whether the charger supports high-speed charging (e.g., PD charging) based on the second charging mode.

If it is determined in operation 1350 that the charger supports high-speed charging (e.g., PD charging) based on the second charging mode (Yes), operation 1360 may be performed.

In operation 1360, the docking device 1002, 500, 800, or 900 may switch the communication path to the second communication (e.g., CC communication or PD communication) path.

In operation 1370, the docking device 1002, 500, 800, or 900 may perform high-speed charging (e.g., PD charging) based on the second charging mode.

If it is determined in operation 1350 that the charger does not support high-speed charging (e.g., PD charging) based on the second charging mode (No), operation 1380 may be performed.

In operation 1380, the docking device 1002, 500, 800, or 900 may maintain the first communication (e.g., one-wire communication) path. The docking device 1002, 500, 800, or 900 may perform general charging based on the first charging mode in a state where the communication path is the first communication (e.g., one-wire communication) path. For example, the docking device 1002, 500, 800, or 900 may perform AFC charging or QC charging based on the first charging mode in a state where the communication path is the first communication (e.g., one-wire communication) path.

The respective operations described with reference to FIG. 13 may be performed sequentially, but are not necessarily performed in that order. For example, the order of individual operations may be changed, and at least two operations may be performed in parallel.

According to an embodiment, operations 1310, 1320, 1330, 1340, 1350, 1360, 1370, and 1380 may be understood to be performed under the control of a controller 1021 (e.g., the MCU of FIG. 10) of the docking device 1002, 500, 800, or 900.

For example, operations of the controller 1021 (e.g., an MCU), the PDIC 1023, the MUIC 1024, the first switch 1025, the second switch 1026, and the third switch 1027 may be performed sequentially.

For example, operations of the controller 1021 (e.g., an MCU), the PDIC 1023, the MUIC 1024, the first switch 1025, the second switch 1026, and the third switch 1027 may be performed in parallel.

For example, operations of the controller 1021 (e.g., an MCU), the PDIC 1023, the MUIC 1024, the first switch 1025, the second switch 1026, and the third switch 1027 may be performed by loading instructions stored in the memory 1030.

For example, the memory 1030 may store instructions for performing operations of the controller 1021 (e.g., an MCU), the PDIC 1023, the MUIC 1024, the first switch 1025, the second switch 1026, and the third switch 1027.

At least some operations illustrated in FIG. 13 may be preceded or followed by at least some operations described with reference to other drawings in this document, which may additionally and/or alternatively be included.

FIG. 14 is a view illustrating a method of operating an electronic device and a keyboard docking device according to an embodiment of the disclosure.

Referring to FIGS. 10 and 14, an electronic device 1001 (e.g., the electronic device 101 of FIG. 1, the electronic device 200 of FIGS. 2A to 2D, the electronic device 300 of FIGS. 3A and 3B, the electronic device 400 of FIG. 4, the electronic device 700 of FIG. 7, or the electronic device 400 of FIG. 9) may be mounted (e.g., placed) on a keyboard docking device 1003 (e.g., the keyboard docking device 900 of FIG. 9).

When the electronic device 1001, 101, 200, 300, 400, or 700 is mounted (e.g., placed) on the keyboard docking device 1003 or 900, the pogo pin pad unit 1019 of the electronic device 1001, 101, 200, 300, 400, or 700 may be electrically connected to the pogo pin unit 1029 of the keyboard docking device 1003 or 900.

In operation 1410, the electronic device 1001, 101, 200, 300, 400, or 700 may identify the pogo pin connection.

In operation 1430, the keyboard docking device 1003 or 900 may identify the pogo pin connection.

For example, the electronic device 1001, 101, 200, 300, 400, or 700 and the docking device 1002, 500, 800, or 900 may perform communication and charging operations through the pogo pin connection.

In operations 1410 and 1430, before a charger is mounted to the docking device 1002, 500, 800, or 900, data transmission and reception may be performed between the electronic device 1001, 101, 200, 300, 400, or 700 and the docking device 1002, 500, 800, or 900 using the first communication (e.g., one-wire communication).

In operation 1431, the keyboard docking device 1003 or 900 may identify whether a charger is connected to a charging port (e.g., the charging port 1028 of FIG. 10).

In operation 1432, when a charger is connected to the charging port (e.g., the charging port 1028 of FIG. 10) of the keyboard docking device 1003 or 900, the keyboard docking device 1003 or 900 may recognize the type of the charger (e.g., a charger supporting the first charging mode or a charger supporting the second charging mode).

For example, the keyboard docking device 1002, 500, 1003, or 900 may recognize whether the charger supports charging based on the first charging mode (e.g., general charging, AFC charging, or QC charging) or supports high-speed charging (e.g., PD charging) based on the second charging mode.

In operation 1433, the keyboard docking device 1003 or 900 may provide data regarding switching of the communication path to the electronic device 1001, 101, 200, 300, 400, or 700 using the first communication (e.g., one-wire communication) path.

In operation 1413, the electronic device 1001, 101, 200, 300, 400, or 700 may acquire data regarding switching of the communication path from the keyboard docking device 1003 or 900. The electronic device 1001, 101, 200, 300, 400, or 700 may control the first switch 1015 to switch the communication path based on the data regarding the switching of the communication path received through the first communication (e.g., one-wire communication) path.

In operation 1414, the electronic device 1001, 101, 200, 300, 400, or 700 may determine whether the charger supports high-speed charging (e.g., PD charging) based on the second charging mode based on data regarding the charging mode received from the keyboard docking device 1003 or 900.

If it is determined in operation 1414 that the charger does not support high-speed charging (e.g., PD charging) based on the second charging mode (No), operation 1415 may be performed.

In operation 1415, the electronic device 1001, 101, 200, 300, 400, or 700 may maintain the first communication (e.g., one-wire communication) path. For example, if the current communication path is the second communication (e.g., CC communication or PD communication) path, the electronic device may switch the communication path to the first communication (e.g., one-wire communication) path. For example, the electronic device 1001, 101, 200, 300, 400, or 700 may perform general charging based on the first charging mode in a state where the communication path is the first communication (e.g., one-wire communication) path. For example, the electronic device 1001, 101, 200, 300, 400, or 700 may perform AFC charging or QC charging based on the first charging mode in a state where the communication path is the first communication (e.g., one-wire communication) path.

If it is determined in operation 1414 that the charger supports high-speed charging (e.g., PD charging) based on the second charging mode (Yes), operation 1416 may be performed.

In operation 1416, the electronic device 1001, 101, 200, 300, 400, or 700 may display a popup message on the display to guide the user on the available charging modes (e.g., a message stating "Please select your preferred charging mode between general charging and high-speed charging (e.g., PD charging)").

In operation 1416, for example, when the popup message (e.g., "Please select your preferred charging mode between general charging and high-speed charging (e.g., PD charging)") is displayed on the display of the electronic device 1001, 101, 200, 300, 400, or 700, the user may select one of the first charging mode (e.g., general charging) and the second charging mode (e.g., high-speed charging or PD charging). If the user selects the second charging mode (e.g., high-speed charging or PD charging), the electronic device 1001, 101, 200, 300, 400, or 700 may switch to the PD charging (or high-speed charging) based on the second charging mode without receiving data about the charger type from the docking device 1002, 500, or 800, or the keyboard docking device 900 (e.g., the keyboard docking device 1003 of FIG. 13). The electronic device 1001, 101, 200, 300, 400, or 700 may notify the docking device 1002, 500, or 800 or the keyboard docking device 900 or 1003 that it is switched to the PD charging (or high-speed charging).

In operation 1437, in the keyboard use mode, the keyboard docking device 1003 or 900 may identify whether a mode switching key is recognized or whether the unused duration of the keyboard reaches a predetermined period of time. For example, the keyboard docking device 1003 or 900 may generate a mode switching control signal indicating that mode switching is performed when the mode conversion key is recognized or when the unused duration of the keyboard reaches the predetermined period of time. The keyboard docking device 1003 or 900 may provide a mode switching control signal to the electronic device 1001, 101, 200, 300, 400, or 700 through the first communication (e.g., one-wire communication).

In operation 1417, the electronic device 1001, 101, 200, 300, 400, or 700 may recognize, based on the mode switching control signal from the keyboard docking device 1003 or 900, that the keyboard docking device 1003 or 900 is switched from the keyboard use mode to the charging mode.

In operation 1438, the keyboard docking device 1003 or 900 may switch the communication path to the second communication (e.g., CC communication or PD communication) path.

In operation 1418, the electronic device 1001, 101, 200, 300, 400, or 700 may switch the communication path to the second communication (e.g., CC communication or PD communication) path.

In operation 1439, the keyboard docking device 1003 or 900 may perform high-speed charging (e.g., PD charging) based on the second charging mode in a state where the communication path is the second communication (e.g., CC communication or PD communication) path.

In operation 1419, the electronic device 1001, 101, 200, 300, 400, or 700 may perform high-speed charging (e.g., PD charging) based on the second charging mode in a state where the communication path is the second communication (e.g., CC communication or PD communication) path.

In operation 1440, the keyboard docking device 1003 or 900 may identify whether key input occurs in the charging mode state. For example, the keyboard docking device 1003 or 900 may provide data regarding the occurrence of a key input to the electronic device 1001, 101, 200, 300, 400, or 700.

In operation 1441, when a key input occurs, the keyboard docking device 1003 or 900 may switch from the charging mode to the keyboard use mode.

For example, the keyboard docking device 1003 or 900 may switch the communication path from the second communication (e.g., CC communication or PD communication) path to the first communication (e.g., one-wire communication) path.

For example, the keyboard docking device 1003 or 900 may perform general charging, AFC charging, or QC charging based on the first charging mode in a state where the communication path is the first communication (e.g., one-wire communication) path.

In operation 1420, the electronic device 1001, 101, 200, 300, 400, or 700 may acquire data regarding the occurrence of a key input from the keyboard docking device 1003 or 900. The electronic device 1001, 101, 200, 300, 400, or 700 may recognize a key input from the keyboard docking device 1003 or 900 based on the data regarding the occurrence of the key input.

In operation 1421, the electronic device 1001, 101, 200, 300, 400, or 700 may switch the communication path from the second communication (e.g., CC communication or PD communication) path to the first communication (e.g., one-wire communication) path.

For example, the electronic device 1001, 101, 200, 300, 400, or 700 may perform AFC charging or QC charging of the first charging mode in a state where the communication path is the first communication (e.g., one-wire communication) path.

According to an embodiment, in addition to the user switching from the charging mode to the keyboard use mode by pressing a key on the keyboard, the communication path may be switched to the first communication (e.g., one-wire communication) path.

For example, while the electronic device 1001, 101, 200, 300, 400, or 700 and the keyboard docking device 1003 or 900 are performing high-speed charging (e.g., PD charging) based on the second charging mode, the charger may be detached from the keyboard docking device 1003 or 900. When the charger is detached from the keyboard docking device 1003 or 900, the keyboard docking device 1003 or 900 may switch the communication path from the second communication (e.g., CC communication or PD communication) path to the first communication (e.g., one-wire communication) path. The keyboard docking device 1003 or 900 may provide data regarding the switching of the communication path to the electronic device 1001, 101, 200, 300, 400, or 700. The electronic device 1001, 101, 200, 300, 400, or 700 may switch the communication path from the second communication (e.g., CC communication or PD communication) path to the first communication (e.g., one-wire communication) path based on the data regarding the switching of the communication path from the keyboard docking device 1003 or 900.

According to an embodiment of the disclosure, the electronic device 1001, 101, 200, 300, 400, or 700 and the docking device 1002, 500, 800, or 900 may be switchable from the keyboard use mode to the charging mode.

According to an embodiment of the disclosure, the electronic device 1001, 101, 200, 300, 400, or 700 and the docking device 1002, 500, 800, or 900 may be switchable from the charging mode to the keyboard use mode.

The respective operations described with reference to FIG. 14 may be performed sequentially, but are not necessarily performed in that order. For example, the order of individual operations may be changed, and at least two operations may be performed in parallel.

According to an embodiment, operations 1410, 1413, 1414, 1415, 1416, 1417, 1418, 1419, 1420, and 1421 may be understood to be performed under the control of a processor (e.g., the processor 120 of FIG. 1 or the processor 1010 of FIG. 10) of the electronic device 1001, 101, 200, 300, 400, or 700.

For example, operations of the processor 120 or 1010, the controller 1011, the PDIC 1012, the switching charger 1013, the direct charger 1014, the first switch 1015, the second switch 1016, and the third switch 1017 may be performed sequentially.

For example, operations of the processor 120 or 1010, the controller 1011, the PDIC 1012, the switching charger 1013, the direct charger 1014, the first switch 1015, the second switch 1016, and the third switch 1017 may be performed in parallel.

For example, the operations of the processor 120 or 1010, the controller 1011, the PDIC 1012, the switching charger 1013, the direct charger 1014, the first switch 1015, the second switch 1016, and the third switch 1017 may be performed by loading instructions stored in the memory 130.

For example, the memory 130 may store instructions for performing operations of the processor 120 or 1010, the controller 1011, the PDIC 1012, the switching charger 1013, the direct charger 1014, the first switch 1015, the second switch 1016, and the third switch 1017.

According to an embodiment, operations 1430, 1431, 1432, 1433, 1437, 1438, 1439, 1440, and 1441 may be understood to be performed under the control of a controller 1021 (e.g., the MCU of FIG. 10) of the keyboard docking device 1003 or 900.

For example, operations of the controller 1021 (e.g., an MCU), the PDIC 1023, the MUIC 1024, the first switch 1025, the second switch 1026, and the third switch 1027 may be performed sequentially.

For example, operations of the controller 1021 (e.g., an MCU), the PDIC 1023, the MUIC 1024, the first switch 1025, the second switch 1026, and the third switch 1027 may be performed in parallel.

For example, operations of the controller 1021 (e.g., an MCU), the PDIC 1023, the MUIC 1024, the first switch 1025, the second switch 1026, and the third switch 1027 may be performed by loading instructions stored in the memory 1030.

For example, the memory 1030 may store instructions for performing operations of the controller 1021 (e.g., an MCU), the PDIC 1023, the MUIC 1024, the first switch 1025, the second switch 1026, and the third switch 1027.

At least some operations illustrated in FIG. 14 may be preceded or followed by at least some operations described with reference to other drawings in this document, which may additionally and/or alternatively be included.

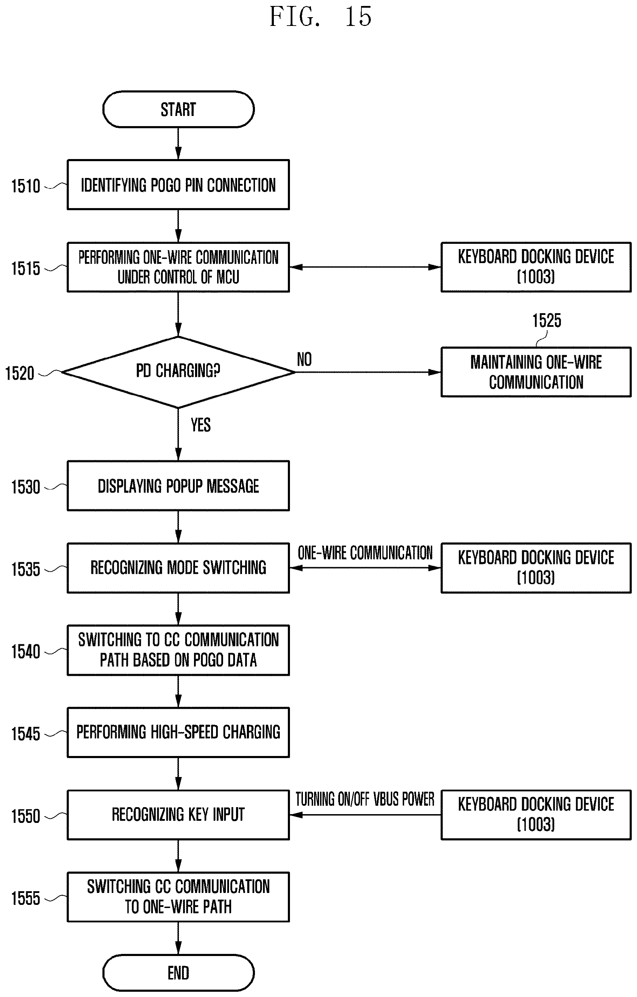

FIG. 15 illustrates a method of operating an electronic device according to an embodiment of the disclosure.

Referring to FIGS. 10 and 15, an electronic device 1001 (e.g., the electronic device 101 of FIG. 1, the electronic device 200 of FIGS. 2A to 2D, the electronic device 300 of FIGS. 3A and 3B, the electronic device 400 of FIG. 4, the electronic device 700 of FIG. 7, or the electronic device 400 of FIG. 9) may be mounted (e.g., placed) on a keyboard docking device 1003 (e.g., the keyboard docking device 900 of FIG. 9).

When the electronic device 1001, 101, 200, 300, 400, or 700 is mounted (e.g., placed) on the keyboard docking device 1003 or 900, the pogo pin pad unit 1019 of the electronic device 1001, 101, 200, 300, 400, or 700 may be electrically connected to the pogo pin unit 1029 of the keyboard docking device 1003 or 900.

In operation 1510, the electronic device 1001, 101, 200, 300, 400, or 700 may identify the pogo pin connection.

For example, the electronic device 1001, 101, 200, 300, 400, or 700 and the keyboard docking device 1003 or 900 may perform communication and charging operations through a pogo pin connection.

In operation 1515, the electronic device 1001, 101, 200, 300, 400, or 700 may acquire data regarding the switching of the communication path from the keyboard docking device 1003 or 900 through the first communication (e.g., one-wire communication) path. For example, the electronic device 1001, 101, 200, 300, 400, or 700 may control the first switch 1015 to switch the communication path based on the data regarding the switching of the communication path received through the first communication (e.g., one-wire communication) path.

In operation 1520, the electronic device 1001, 101, 200, 300, 400, or 700 may determine whether the charger supports high-speed charging (e.g., PD charging) based on the second charging mode based on data regarding the charging mode received from the keyboard docking device 1003 or 900.

If it is determined in operation 1520 that the charger does not support high-speed charging (e.g., PD charging) based on the second charging mode (No), operation 1525 may be performed.

In operation 1525, the electronic device 1001, 101, 200, 300, 400, or 700 may maintain the first communication (e.g., one-wire communication) path. For example, if the current communication path is the second communication (e.g., CC communication or PD communication) path, the electronic device may switch the communication path to the first communication (e.g., one-wire communication) path. For example, the electronic device 1001, 101, 200, 300, 400, or 700 may perform general charging, AFC charging, or QC charging based on the first charging mode in a state where the communication path is the first communication (e.g., one-wire communication) path.

If it is determined in operation 1520 that the charger supports high-speed charging (e.g., PD charging) based on the second charging mode (Yes), operation 1530 may be performed.

In operation 1530, the electronic device 1001, 101, 200, 300, 400, or 700 may display a popup message on the display to guide the user on the available charging modes (e.g., "Please select your preferred charging mode between general charging and high-speed charging (e.g., PD charging)").

In operation 1535, the electronic device 1001, 101, 200, 300, 400, or 700 may acquire a mode switching control signal from the key board docking device 1003 or 900 through the first communication (e.g., one-wire communication) path. For example, the electronic device 1001, 101, 200, 300, 400, or 700 may recognize, based on the mode switching control signal from the keyboard docking device 1003 or 900, that the keyboard docking device 1003 or 900 is switched from the keyboard use mode to the charging mode.

In operation 1540, the electronic device 1001, 101, 200, 300, 400, or 700 may switch the communication path to the second communication (e.g., CC communication or PD communication) path.

In operation 1545, the electronic device 1001, 101, 200, 300, 400, or 700 may perform high-speed charging (e.g., PD charging) based on the second charging mode in a state where the communication path is the second communication (e.g., CC communication or PD communication) path.

In operation 1550, the electronic device 1001, 101, 200, 300, 400, or 700 may acquire data regarding the occurrence of a key input from the keyboard docking device 1003 or 900. The electronic device 1001, 101, 200, 300, 400, or 700 may recognize a key input from the keyboard docking device 1003 or 900 based on the data regarding the occurrence of the key input.

In operation 1555, the electronic device 1001, 101, 200, 300, 400, or 700 may switch the communication path from the second communication (e.g., CC communication or PD communication) path to the first communication (e.g., one-wire communication) path.

For example, the electronic device 1001, 101, 200, 300, 400, or 700 may perform general charging, AFC charging, or QC charging based on the first charging mode in a state where the communication path is the first communication (e.g., one-wire communication) path.

According to an embodiment of the disclosure, the electronic device 1001, 101, 200, 300, 400, or 700 and the docking device 1002, 500, 800, or 900 may be switchable from the keyboard use mode to the charging mode.

According to an embodiment of the disclosure, the electronic device 1001, 101, 200, 300, 400, or 700 and the docking device 1002, 500, 800, or 900 may be switchable from the charging mode to the keyboard use mode.

The respective operations described with reference to FIG. 15 may be performed sequentially, but are not necessarily performed in that order. For example, the order of individual operations may be changed, and at least two operations may be performed in parallel.

According to an embodiment, operations 1510 to 1555 may be understood to be performed under the control of a processor (e.g., the processor 120 of FIG. 1 or the processor 1010 of FIG. 10) of the electronic device 1001, 101, 200, 300, 400, or 700.

For example, operations of the processor 120 or 1010, the controller 1011, the PDIC 1012, the switching charger 1013, the direct charger 1014, the first switch 1015, the second switch 1016, and the third switch 1017 may be performed sequentially.

For example, operations of the processor 120 or 1010, the controller 1011, the PDIC 1012, the switching charger 1013, the direct charger 1014, the first switch 1015, the second switch 1016, and the third switch 1017 may be performed in parallel.

For example, the operations of the processor 120 or 1010, the controller 1011, the PDIC 1012, the switching charger 1013, the direct charger 1014, the first switch 1015, the second switch 1016, and the third switch 1017 may be performed by loading instructions stored in the memory 130.

For example, the memory 130 may store instructions for performing operations of the processor 120 or 1010, the controller 1011, the PDIC 1012, the switching charger 1013, the direct charger 1014, the first switch 1015, the second switch 1016, and the third switch 1017.

At least some operations illustrated in FIG. 15 may be preceded or followed by at least some operations described with reference to other drawings in this document, which may additionally and/or alternatively be included.

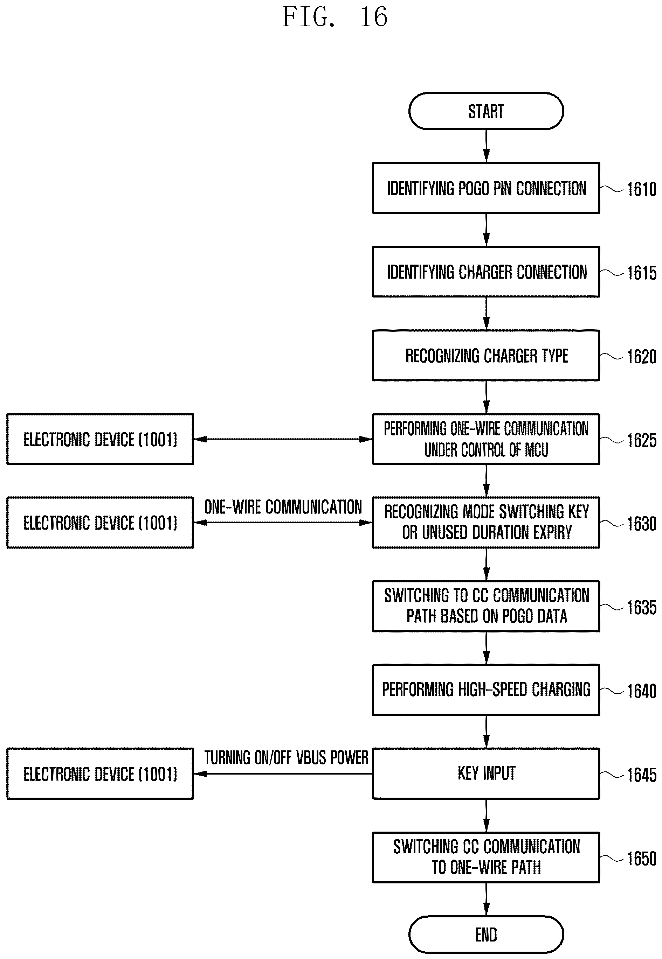

FIG. 16 illustrates a method of operating a keyboard docking device according to an embodiment of the disclosure.

Referring to FIGS. 10 and 16, an electronic device 1001 (e.g., the electronic device 101 of FIG. 1, the electronic device 200 of FIGS. 2A to 2D, the electronic device 300 of FIGS. 3A and 3B, the electronic device 400 of FIG. 4, the electronic device 700 of FIG. 7, or the electronic device 400 of FIG. 9) may be mounted (e.g., placed) on a keyboard docking device 1003 (e.g., the keyboard docking device 900 of FIG. 9).

When the electronic device 1001, 101, 200, 300, 400, or 700 is mounted (e.g., placed) on the keyboard docking device 1003 or 900, the pogo pin pad unit 1019 of the electronic device 1001, 101, 200, 300, 400, or 700 may be electrically connected to the pogo pin unit 1029 of the keyboard docking device 1003 or 900.

In operation 1610, the keyboard docking device 1003 or 900 may identify the pogo pin connection.

For example, the electronic device 1001, 101, 200, 300, 400, or 700 and the keyboard docking device 1003 or 900 may perform communication and charging operations through a pogo pin connection.

In operation 1615, the keyboard docking device 1003 or 900 may identify whether a charger is connected to a charging port (e.g., the charging port 1028 of FIG. 10).

In operation 1620, when a charger is connected to the charging port (e.g., the charging port 1028 of FIG. 10) of the keyboard docking device 1003 or 900, the keyboard docking device 1003 or 900 may recognize the type of the charger (e.g., a charger supporting the first charging mode or a charger supporting the second charging mode).

For example, the keyboard docking device 1002, 500, 1003, or 900 may recognize whether the charger supports general charging, AFC charging, or QC charging based on the first charging mode, or supports high-speed charging (e.g., PD charging) based on the second charging mode.

In operation 1625, the keyboard docking device 1003 or 900 may provide data regarding switching of the communication path to the electronic device 1001, 101, 200, 300, 400, or 700 using the first communication (e.g., one-wire communication) path.

For example, the keyboard docking device 1003 or 900 may provide data regarding switching of the first communication (e.g., one-wire communication) path to the electronic device 1001, 101, 200, 300, 400, or 700.

In operation 1630, in the keyboard use mode, the keyboard docking device 1003 or 900 may identify whether a mode switching key is recognized or whether the unused duration of the keyboard reaches a predetermined period of time. For example, the keyboard docking device 1003 or 900 may generate a mode switching control signal indicating that mode switching is performed when the mode conversion key is recognized or when the unused duration of the keyboard reaches the predetermined period of time. The keyboard docking device 1003 or 900 may provide a mode switching control signal to the electronic device 1001, 101, 200, 300, 400, or 700 through the first communication (e.g., one-wire communication). For example, the electronic device 1001, 101, 200, 300, 400, or 700 may recognize, based on the mode switching control signal from the keyboard docking device 1003 or 900, that the keyboard docking device 1003 or 900 is switched from the keyboard use mode to the charging mode.

In operation 1635, the keyboard docking device 1003 or 900 may switch the communication path to the second communication (e.g., CC communication or PD communication) path.

In operation 1640, the keyboard docking device 1003 or 900 may perform high-speed charging (e.g., PD charging) based on the second charging mode in a state where the communication path is the second communication (e.g., CC communication or PD communication) path.

In operation 1645, the keyboard docking device 1003 or 900 may identify whether key input occurs in the charging mode state. For example, the keyboard docking device 1003 or 900 may provide data regarding the occurrence of a key input to the electronic device 1001, 101, 200, 300, 400, or 700. For example, the keyboard docking device 1003 or 900 may turn on/off power (e.g., VBUS power) one or more times. Data regarding the occurrence of a key input may be generated by turning on/off power (e.g., VBUS power) one or more times. For example, the electronic device 1001, 101, 200, 300, 400, or 700 may recognize that power (e.g., VBUS power) is turned on/off one or more times. The electronic device 1001, 101, 200, 300, 400, or 700 may acquire data regarding the occurrence of a key input from the keyboard docking device 1003 or 900. The electronic device 1001, 101, 200, 300, 400, or 700 may recognize a key input from the keyboard docking device 1003 or 900 based on the data regarding the occurrence of the key input.

In operation 1650, when a key input occurs, the keyboard docking device 1003 or 900 may switch from the charging mode to the keyboard use mode.

For example, the keyboard docking device 1003 or 900 may switch the communication path from the second communication (e.g., CC communication or PD communication) path to the first communication (e.g., one-wire communication) path.

For example, the keyboard docking device 1003 or 900 may perform general charging, AFC charging, or QC charging based on the first charging mode in a state where the communication path is the first communication (e.g., one-wire communication) path.

According to an embodiment of the disclosure, the electronic device 1001, 101, 200, 300, 400, or 700 and the docking device 1002, 500, 800, or 900 may be switchable from the keyboard use mode to the charging mode.

According to an embodiment of the disclosure, the electronic device 1001, 101, 200, 300, 400, or 700 and the docking device 1002, 500, 800, or 900 may be switchable from the charging mode to the keyboard use mode.

According to an embodiment of the disclosure, the electronic device 1001, 101, 200, 300, 400, or 700 and the docking device 1002, 500, 800, or 900 may be charged simultaneously while using the keyboard.

The respective operations described with reference to FIG. 16 may be performed sequentially, but are not necessarily performed in that order. For example, the order of individual operations may be changed, and at least two operations may be performed in parallel.

According to an embodiment, operations 1610 to 1650 may be understood to be performed under the control of a controller 1021 (e.g., the MCU of FIG. 10) of the keyboard docking device 1003 or 900.

For example, operations of the controller 1021 (e.g., an MCU), the PDIC 1023, the MUIC 1024, the first switch 1025, the second switch 1026, and the third switch 1027 may be performed sequentially.

For example, operations of the controller 1021 (e.g., an MCU), the PDIC 1023, the MUIC 1024, the first switch 1025, the second switch 1026, and the third switch 1027 may be performed in parallel.

For example, operations of the controller 1021 (e.g., an MCU), the PDIC 1023, the MUIC 1024, the first switch 1025, the second switch 1026, and the third switch 1027 may be performed by loading instructions stored in the memory 1030.

For example, the memory 1030 may store instructions for performing operations of the controller 1021 (e.g., an MCU), the PDIC 1023, the MUIC 1024, the first switch 1025, the second switch 1026, and the third switch 1027.

At least some operations illustrated in FIG. 16 may be preceded or followed by at least some operations described with reference to other drawings in this document, which may additionally and/or alternatively be included.

According to an embodiment of the disclosure, a docking device (e.g., the docking device 500 of FIGS. 4 to 6, the docking device 800 of FIGS. 7 and 8, the keyboard docking device 900 of FIG. 9, the docking device 1002 of FIGS. 10 and 11, or the keyboard docking device 1003 of FIG. 14) may include a pogo pin unit (e.g., the pogo pin unit 1029 of FIG. 10) including a ground pogo pin (e.g., the ground pogo pin 1029a of FIG. 10), a data pogo pin (e.g., the communication pogo pin 1029b of FIG. 10), and a power pogo pin (e.g., the power pogo pin 1029c of FIG. 10), a charging port (e.g., the charging port 1028 of FIG. 10) to which a charger is connected, a controller (e.g., the MCU 1021 of FIG. 10) configured to recognize a type of the charger connected to the charging port 1028, a first switch (e.g., the first switch 1025 of FIG. 10) electrically connected to the pogo pin unit 1029 and the controller 1021 and configured to branch a communication path, a second switch (e.g., the second switch 1026 of FIG. 10) electrically connected between the charging port 1028 and the controller 1021, and a third switch (e.g., the third switch 1027 of FIG. 10) electrically connected between the charging port 1028 and the pogo pin unit 1029.

The controller 1021 may be configured to generate a switch control signal to control on/off of the first switch 1025, the second switch, and the third switch (e.g., the third switch 1027 of FIG. 10). The controller 1021 may be configured to switch the communication path to a first communication path for a first charging mode or a second communication path for a second charging mode based on a type of the charger connected to the charging port 1028.

According to an embodiment, the controller 1021 may include a power delivery integrated circuit (PDIC) (e.g., the PDIC 1023 of FIG. 10) and a micro USB integrated circuit (MUIC) (e.g., the MUIC 1024 of FIG. 10) configured to recognize the type of the charger as well as communication data, ground, and power input from the charging port 1028.

According to an embodiment, the first charging mode may include general charging, adaptive fast charge (AFC) charging, or quick charge (QC) charging. The second charging mode may include power delivery (PD) charging.

According to an embodiment, the controller 1021 may be configured to determine whether the type of the charger connected to the charging port 1028 supports the first charging mode or the second charging mode. The controller 1021 may be configured to provide data regarding the type of the charger to an electronic device (e.g., the electronic device 1001 of FIG. 10) electrically connected via the pogo pin unit 1029.

According to an embodiment, when the charger supports the first charging mode, the controller 1021 may be configured to maintain or switch the communication path to the first communication path. In a state where the communication path is the first communication path, the general charging, the AFC charging, or the QC charging may be performed.

According to an embodiment, the controller 1021 may be configured to generate first communication path switching data indicating that the communication path is switched to the first communication path. The controller 1021 may be configured to provide the first communication path switching data to the electronic device 1001 electrically connected via the pogo pin unit 1029.

According to an embodiment, when the charger supports the second charging mode, the controller 1021 may be configured to switch the communication path to the second communication path. In a state where the communication path is the second communication path, the PD charging may be performed.

According to an embodiment, the controller 1021 may be configured to generate second communication path switching data indicating that the communication path is switched to the second communication path. The controller 1021 may be configured to provide the second communication path switching data to the electronic device 1001 electrically connected via the pogo pin unit 1029.

According to an embodiment, the docking device 500, 800, 900, 1002, or 1003 may further include a keyboard (e.g., the keyboard 920 of FIG. 9). The controller 1021 may be configured to switch an operation mode depending on whether the keyboard 920 is in use.

According to an embodiment, the controller 1021 may be configured to identify key input from the keyboard 920 during a predetermined period of time in a keyboard use mode. The controller 1021 may be configured to switch the operation mode to a charging mode when there is no key input from the keyboard 920 during the predetermined period of time.

According to an embodiment, when a charger configured to support the second charging mode is connected to the charging port 1028, the controller 1021 may be configured to perform the PD charging. The controller 1021 may be configured to restrict the use of the keyboard 920 during the PD charging.

According to an embodiment, the controller 1021 may be configured to identify key input from the keyboard 920 in a charging mode state. The controller 1021 may be configured to switch the operation mode to the keyboard use mode when key input from the keyboard 920 is identified.

According to an embodiment, when a charger configured to support the first charging mode is connected to the charging port 1028 in the keyboard use mode, the controller 1021 may be configured to perform the general charging, the AFC charging, or the QC charging along with the use of the keyboard 920.

A method of operating a docking device according to an embodiment of the disclosure (e.g., the docking device 500 of FIGS. 4 to 6, the docking device 800 of FIGS. 7 and 8, the keyboard docking device 900 of FIG. 9, the docking device 1002 of FIGS. 10 and 11, or the keyboard docking device 1003 of FIG. 14) may include identifying a connection with the electronic device 1001 through a pogo pin unit 1029, identifying whether a charger is connected to the charging port 1028, identifying a charging type of the charger, recognizing communication data, ground, and power input from the charging port 1028, providing data indicating that the charger is connected to the electronic device 1001, determining whether the charger supports high-speed charging, and switching a communication path to a first communication path for a first charging mode or a second communication path for a second charging mode, based on a type of the charger connected to the charging port 1028.

According to an embodiment, the first charging mode may include general charging, adaptive fast charge (AFC) charging, or quick charge (QC) charging. The second charging mode may include power delivery (PD) charging.

According to an embodiment, the method may include determining whether the type of the charger connected to the charging port 1028 supports the first charging mode or the second charging mode. The method may include providing data regarding the type of the charger to the electronic device 1001 electrically connected via the pogo pin unit 1029.

According to an embodiment, when the charger supports the first charging mode, the method may including switching the communication path to the first communication path. The method may include performing the general charging, the AFC charging, or the QC charging in a state where the communication path is the first communication path.

According to an embodiment, the method may include generating first communication path switching data indicating that the communication path is switched to the first communication path.

The method may include providing the first communication path switching data to an electronic device 1001 electrically connected via the pogo pin unit 1029.

According to an embodiment, the method may include, when the charger supports the second charging mode, switching the communication path to the second communication path. In a state where the communication path is the second communication path, the PD charging may be performed.

According to an embodiment, the method may include generating second communication path switching data indicating that the communication path is switched to the second communication path. The method may include providing the second communication path switching data to an electronic device 1001 electrically connected via the pogo pin unit 1029.

According to an embodiment, the docking device 500, 800, 900, 1002, or 1003 may include a keyboard 920. The method may include switching an operation mode to a charging mode or a keyboard use mode depending on whether the keyboard 920 is in use.

According to an embodiment, the method may include identifying whether there is no key input from the keyboard 920 during a predetermined period of time in the keyboard use mode. The method may include switching the operation mode to the charging mode when there is no key input from the keyboard 920 during the predetermined period of time.

According to an embodiment, the method may include performing PD charging when a charger configured to support the second charging mode is connected to the charging port 1028. Use of the keyboard 920 may be restricted during the PD charging.

According to an embodiment, the method may include identifying key input from the keyboard 920 in a charging mode state. The method may include, when key input from the keyboard 920 is identified, switching the operation mode to the keyboard use mode.

According to an embodiment, the method may include, when a charger configured to support the first charging mode is connected to the charging port 1028 in the keyboard use mode, performing general charging, the AFC charging, or the QC charging along with use of the keyboard 920.

The electronic device, docking device, and method of operating the electronic device and the docking device according to the disclosure may enable high-speed charging (e.g., 25W or more, PD charging) to be performed without errors in PD communication when the charging (e.g., 25W or more, PD charging) is performed using a docking device including three pogo pins.

The electronic device, docking device, and method of operating the electronic device and the docking device according to the disclosure may enable high-speed charging (e.g., 25W or more, PD charging) without delay via one-wire communication by separating a data communication pad from a charging path, so as to prevent (e.g., substantially prevent) communication delay during switching of the charging mode.

Advantageous effects obtainable from the disclosure may not be limited to the above-mentioned effects, and other effects which are not mentioned herein may be clearly understood from the following description by those skilled in the art to which the disclosure pertains.

## Claims

1. A docking device comprising:
a pogo pin unit comprising a ground pogo pin, a data pogo pin, and a power pogo pin;
a charging port to which a charger is connected;
a controller configured to recognize a type of the charger connected to the charging port;
a first switch electrically connected to the pogo pin unit and the controller, and configured to branch a communication path;
a second switch electrically connected between the charging port and the controller; and
a third switch electrically connected between the charging port and the pogo pin unit,
wherein the controller is configured to:
generate a switch control signal to control on/off of the first to third switches, and
switch the communication path to a first communication path for a first charging mode or a second communication path for a second charging mode, based on the type of the charger connected to the charging port.

2. The docking device of claim 1, wherein the controller comprises a power delivery integrated circuit (PDIC) and a micro USB integrated circuit (MUIC) configured to recognize a type of the charger as well as communication data, ground, and power input from the charging port.

3. The docking device any one of claims 1 and 2, wherein the first charging mode includes general charging, adaptive fast charge (AFC) charging, or quick charge (QC) charging, and
wherein the second charging mode includes power delivery (PD) charging.

4. The docking device of any one of claims 1 to 3, wherein the controller is configured to:
determine whether the type of the charger connected to the charging port supports the first charging mode or the second charging mode, and
provide data regarding the type of the charger to an electronic device electrically connected via the pogo pin unit.

5. The docking device of any one of claims 1 to 4, wherein the controller is configured to:
maintain or switch the communication path to the first communication path in case that the charger supports the first charging mode,
perform the general charging, the AFC charging, or the QC charging in a state where the communication is switched to the first communication path,
generate first communication path switching data indicating that the communication path is switched to the first communication path, and
provide the first communication path switching data to an electronic device electrically connected via the pogo pin unit.

6. The docking device of any one of claims 1 to 4, wherein the controller is configured to:
switch the communication path to the second communication path in case that the charger supports the second charging mode,
perform the PD charging in a state where the communication path is the second communication path,
generate second communication path switching data indicating that the communication path is switched to the second communication path, and
provide the second communication path switching data to an electronic device electrically connected via the pogo pin unit.

7. The docking device of any one of claims 1 to 6, further comprising:
a keyboard,
wherein the controller is configured to switch an operation mode depending on whether the keyboard is in use.

8. The docking device of any one of claims 1 to 7, wherein the controller is configured to:
identify key input from the keyboard during a predetermined period of time in a keyboard use mode, and
switch the operation mode to the charging mode in case that there is no key input from the keyboard during the predetermined period of time.

9. The docking device of any one of claims 1 to 8, wherein the controller is configured to:
perform the PD charging in case that a charger configured to support the second charging mode is connected to the charging port, and
restrict the use of the keyboard during the PD charging.

10. The docking device of any one of claims 1 to 9, wherein the controller is configured to:
identify key input from the keyboard in a charging mode state, and
switch the operation mode to the keyboard use mode when key input from the keyboard is identified.

11. The docking device of any one of claims 1 to 10, wherein the controller is configured to perform the general charging, the adaptive fast charge (AFC) charging, or the quick charge (QC) charging along with use of the keyboard in case that a charger configured to support the first charging mode is connected to the charging port in the keyboard use mode.

12. A method of operating a docking device, the method comprising:
identifying a connection with an electronic device through a pogo pin unit;
identifying whether a charger is connected to a charging port;
identifying a charging type of the charger;
recognizing communication data, ground, and power input from the charging port;
providing data indicating that the charger is connected to the electronic device;
determining whether the charger supports high-speed charging; and
switching the communication path to a first communication path for a first charging mode or a second communication path for a second charging mode, based on the type of the charger connected to the charging port.

13. The method of claim 12, wherein the first charging mode includes general charging, adaptive fast charge (AFC) charging, or quick charge (QC) charging, and
wherein the second charging mode includes power delivery (PD) charging.

14. The method of claim 12 or 13, further comprising:
determining whether the type of the charger connected to the charging port supports the first charging mode or the second charging mode, and
providing data regarding the type of the charger to an electronic device electrically connected via the pogo pin unit.

15. The method according to any one of claims 12 to 14, further comprising:
switching the communication path to the first communication path in case that the charger supports the first charging mode;
performing the general charging, the AFC charging, or the QC charging in in a state where the communication path is the first communication path;
generating first communication path switching data indicating that the communication path is switched to the first communication path, and
providing the first communication path switching data to an electronic device electrically connected via the pogo pin unit.
